# EUROPÄISCHE PATENTSCHRIFT

(11) **EP 2 526 267 B1**
(45) Veröffentlichungstag und Bekanntmachung des Hinweises auf die Patenterteilung: **13.03.2019**
(21) Anmeldenummer: 11701620.4
(22) Anmeldetag: 20.01.2011
(51) Int. Cl.: F01M 13/04, F01M 13/00, F16K 15/02, F16K 15/04, F16K 17/04, F16K 17/30, B01D 45/10, B01D 45/16, G05D 7/01, F01M 13/02

(54) **VENTIL ZUR STEUERUNG EINES GASSTROMES, FLÜSSIGKEITSABSCHEIDER, ENTLÜFTUNGSSYSTEM SOWIE VERBRENNUNGSMOTOR MIT EINEM DERARTIGEN VENTIL**
VALVE FOR CONTROLLING A GAS FLOW, LIQUID SEPARATOR, VENTILATION SYSTEM AND INTERNAL COMBUSTION ENGINE COMPRISING SUCH A VALVE
VANNE POUR COMMANDER UN FLUX DE GAZ, SÉPARATEUR DE LIQUIDE, SYSTÈME DE PURGE ET MOTEUR À COMBUSTION DOTÉ D'UNE TELLE VANNE

(30) Priorität: 20.01.2010 DE 202010001191 U
(43) Veröffentlichungstag der Anmeldung: 28.11.2012
(73) Patentinhaber: REINZ-Dichtungs-GmbH, 89233 Neu-Ulm (DE)
(72) Erfinder: ZITAROSA, Francesco, 89257 Illertissen (DE); SPÄTH, Bernd, 89073 Ulm (DE)
(74) Vertreter: Pfenning, Meinig & Partner mbB
(86) Internationale Anmeldenummer: PCT/EP2011/000226
(87) Internationale Veröffentlichungsnummer: WO 2011/089006

(56) Entgegenhaltungen:
- DE-A1-102004 037 157
- DE-A1-102005 038 257
- DE-C- 826 085
- DE-U1-202005 009 990
- FR-A- 1 236 014
- US-A- 3 308 798
- US-A- 5 174 330

## Beschreibung

Die vorliegende Erfindung betrifft ein Ventil zur Steuerung eines Gasstromes, wie es beispielsweise zur Steuerung des Gasstromes zwischen einem Kurbelgehäuse und einem Ansaugtrakt eines Verbrennungsmotors eingesetzt wird. Die vorliegende Erfindung betrifft weiterhin einen Flüssigkeitsabscheider sowie für die vorgenannte beispielhafte Anwendung ein Entlüftungssystem für ein Kurbelgehäuse sowie einen Verbrennungsmotor.

Die vorliegende Erfindung wird beispielsweise zur Entfernung von Ölnebel und/oder Öltröpfchen aus Blow-by-Gasen (Durchblasegasen) eines Verbrennungsmotors eingesetzt. Die Blow-by-Gase werden dabei herkömmlicherweise aus dem Kurbelgehäuse über eine zu einem Entlüftungssystem gehörige Entlüftungsleitung zum Ansaugtrakt des Verbrennungsmotors geführt und so wieder dem Verbrennungsprozess zugeführt. Es ist jedoch erforderlich, zuvor mitgerissenes Öl aus diesen Blow-by-Gasen abzuscheiden. Das mitgerissene Öl kann dabei als Ölnebel und/oder als Öltröpfchen in den Blow-by-Gasen mittransportiert werden.

Die Ölabscheidung erfolgt in sog. Ölabscheidern, also Flüssigkeitsabscheidern für Ölnebel und/oder Öltröpfchen aus einem Gas, hier dem Blow-by-Gas. Derartige Ölabscheider verwenden im Stand der Technik zur Abscheidung des Ölnebels oder der Öltröpfchen verschiedene Verfahren, beispielsweise Prallabscheidung, Zentrifugalabscheidung und dergleichen.

Abhängig vom Betriebszustand des Verbrennungsmotors müssen über das Entlüftungssystem unterschiedliche Gasströme (Minutenvolumina) entlüftet werden. Bei unterschiedlichen Betriebszuständen des Verbrennungsmotors variiert auch die Druckdifferenz zwischen dem Ansaugtrakt des Motors und dem Kurbelgehäuse. Dies kann bei einem zu großen Unterdruck im Ansaugtrakt dazu führen, dass das Kurbelgehäuse leer gesaugt werden kann. Andererseits führt ein zu geringer Unterdruck im Ansaugtrakt bzw. ein zu hoher Druckverlust in der Entlüftungsleitung dazu, dass im Kurbelgehäuse ein Überdruck entsteht. Ein Überdruck gegenüber dem atmosphärischen Druck ist im Kurbelgehäuse jedoch nicht zulässig.

Daher werden nach dem Stand der Technik bei nahezu jedem Verbrennungsmotor in der Entlüftungsleitung Druckregelventile angeordnet, die den Druckabfall im Entlüftungssystem regeln und damit das Kurbelgehäuse vor unzulässig hohem Unterdruck oder Überdruck schützen. Sie schließen, wenn der Unterdruck saugseitig zu hoch wird und verursachen so einen zusätzlichen Druckabfall in der Entlüftungsleitung.

Für den Fall, dass im Ansaugtrakt nur ein geringer Unterdruck anliegt oder ein unzulässig hoher Druckabfall in der Entlüftungsleitung auftritt, beispielsweise durch Verstopfen eines der dort angeordneten Ölabscheider, werden in der Entlüftungsleitung Bypass-Leitungen (Umgehungsleitungen) vorgesehen, die die entsprechenden Stellen, d.h. die Ölabscheider, umgehen. Diese sind über Bypassventile verschlossen, die lediglich ansprechen und öffnen, wenn der Differenzdruck eines Abscheiders zu groß wird.

Derartige Bypassventile können, beispielsweise mittels Federn, vorgespannt sein. Sie tragen jedoch keine Ölabscheidefunktion.

Während ungeregelte Systeme ohne Bypassleitung bei einem großen Volumenstrom der Blow-by-Gase einen hohen Druckverlust über den Abscheider erzeugen und bei kleinem Volumenstrom eine schlechte Abscheiderate erzielen, sind Entlüftungssysteme und Ölabscheideventile mit einem Bypass konstruktiv sehr aufwändig und damit auch kostenintensiv. Insbesondere sind derartige Systeme immer spezifisch an die Bedingungen des jeweiligen Verbrennungsmotors anzupassen.

Die DE 103 62 162 B4 zeigt eine Ölabscheidevorrichtung für eine Brennkraftmaschine, die mehrere verengte Durchlässe aufweist. Jeder der Durchlässe weist einen Spalt mit variabler Spaltweite und großem Spaltdurchtrittsquerschnitt auf. Der Spalt ist dabei so ausgebildet, dass er zugleich als Prallabscheider für in dem Blow-by-Gas mitgetragenes Öl wirkt. Um den Durchgangswiderstand des Ventils zu steuern, ist die Spaltdurchschnittsquerschnittsfläche mit der Druckdifferenz über das Ventil variabel.

Die DE 10 2005 038 257 A1 offenbart einen Ölabscheider nach dem Oberbegriff des Anspruchs 1.

Dieser Stand der Technik hat den Nachteil, dass ein derartiges Ventil nur schwer abzudichten ist und die Anpassung an einzelne Motorentypen sehr aufwändig ist. Eine einfache Skalierbarkeit ist nicht gegeben. Es ist daher Aufgabe der vorliegenden Erfindung, einen Flüssigkeitsabscheider bzw. ein Ventil zur Verfügung zu stellen, das einen geringen Bauraum benötigt, eine geringe Teilezahl aufweist und sowohl eine Bypassfunktion als auch eine Flüssigkeitsabscheidefunktion verwirklicht. Weiterhin ist es Aufgabe der vorliegenden Erfindung, ein Entlüftungssystem für Kurbelgehäuse und einen Verbrennungsmotor unter Verwendung erfindungsgemäßer Ventile oder Flüssigkeitsabscheider zur Verfügung zu stellen.

Diese Aufgabe wird durch das Ventil nach Anspruch 1, den Flüssigkeitsabscheider nach Anspruch 14 und das Entlüftungssystem nach Anspruch 15 gelöst. Vorteilhafte Weiterbildungen des erfindungsgemäßen Ventils werden in den abhängigen Ansprüchen 2 bis 13 gegeben.

Die vorliegende Erfindung beschränkt sich nicht auf die Abscheidung von Ölnebel oder Öltröpfchen aus Blow-by-Gasen, sondern ist grundsätzlich für die Abscheidung von Flüssigkeiten aus Gasen geeignet.

Das erfindungsgemäße Ventil weist einen Ventilsitz mit einer Ventilöffnung auf, die mittels eines Ventilverschlusses, beispielsweise eines Ventiltellers, verschlossen werden kann. Die Ventilöffnung kann dabei eine einzelne zusammenhängende Öffnung sein oder mehrere nicht zusammenhängende Öffnungen aufweisen.

Der Ventilverschluss ist auf einem Ventillager gelagert. Erfindungsgemäß weist nun der Ventilverschluss seinerseits ein oder mehrere Gasdurchtrittsöffnungen auf, die sich von der Druckseite des Ventils zur Saugseite des Ventils erstrecken. Diese Gasdurchtrittsöffnungen wirken als solche bereits als Flüssigkeitsabscheideelemente.

Die Gasdurchtrittsöffnungen, die in dem Ventilverschluss, beispielsweise einem Ventilteller, angeordnet sind, können so ausgebildet sein, dass sie auch bei geschlossenem Ventil, d.h. beispielsweise wenn der Ventilverschluss auf dem Ventilsitz aufliegt, geöffnet sind. Diese Öffnungen können insbesondere in Gasdurchtrittsrichtung benachbart zur Ventilöffnung angeordnet sein. Diese Öffnungen bewirken, dass auch bei geschlossenem Ventil ein Gasstrom durch das Ventil strömen kann und in den Öffnungen bzw. beim Durchtritt durch die Öffnungen Flüssigkeit, beispielsweise Öl, abgeschieden wird. Die Öffnungen können zusätzlich mit Ölabscheideelementen versehen sein, um die Wirkung der Flüssigkeitsabscheidung zu verbessern.

Weiterhin können in dem Ventilverschluss weitere Gasdurchtrittsöffnungen angeordnet sein, die bei geschlossenem Ventil durch den Ventilsitz verschlossen sind und erst geöffnet werden, wenn eine bestimmte Druckdifferenz zwischen der Druckseite und der Saugseite des Ventils überschritten wird und damit der Ventilverschluss von dem Ventilsitz abhebt. Hierdurch werden dann diese weiteren Gasdurchtrittsöffnungen in dem Ventilverschluss freigegeben, um ein Durchströmen des Gases zu erlauben. Derartige Gasdurchtrittsöffnungen sind vorteilhafterweise nicht benachbart zur Ventilöffnung angeordnet.

Auch in dem Ventilverschluss können weitere Gasdurchtrittsöffnungen angeordnet sein, die ein ständiges Durchströmen des Gasstromes ermöglichen, unabhängig vom Zustand des Ventils selbst.

Weiterhin können in dem Ventilsitz auch weitere Gasdurchtrittsöffnungen angeordnet sein, die durch den Ventilverschluss im geschlossenen Zustand des Ventils, also wenn der Ventilverschluss auf dem Ventilsitz aufliegt, verschlossen sind und beim Abheben des Ventilverschlusses von dem Ventilsitz freigegeben werden. Diese können benachbart zum Ventilverschluss angeordnet sein und von dem Ventilverschluss verschlossen werden.

Der Ventilsitz kann neben der Ventilöffnung mindestens eine weitere Gasdurchtrittsöffnung aufweisen., die bei geschlossenem Ventil für den Gasdurchtritt von der Druckseite zur Saugseite geöffnet ist. Diese kann insbesondere seitlich außerhalb des auf dem Ventilsitz angeordneten Ventilverschlusses angeordnet sein.

Eine oder mehrere der vorgenannten weiteren Gasdurchtrittsöffnungen können derart in Gasdurchtrittsrichtung benachbart zum Ventilverschluss angeordnet sein, dass sie mit einer der im Ventilverschluss angeordneten Gasdurchtrittsöffnungen einen gemeinsamen Gasdurchtrittsweg bilden.

Der Ventilverschluss kann ein Lager aufweisen, mit dem der Ventilverschluss an einem Ventillager, beispielsweise an einem Bereich des Ventilsitzes als Ventillager, befestigt ist und der Ventilverschluss im Bereich zwischen Ventillager und Ventilöffnung und/oder im Bereich der Ventilöffnung Schlitze aufweist.

Diese Schlitze können in Form konzentrisch um die Ventilöffnung umlaufender Kreisbogenabschnitte ausgebildet sein.

Der Ventilsitz kann mindestens eine Wandung aufweisen, die den Ventilverschluss umschließen und eine Führung für den Ventilverschluss zumindest abschnittsweise längs der Öffnungs- und/oder Schließrichtung bildet.

Die Wandung kann den Ventilverschluss in gasdichter Weise umgeben.

Die vorgenannten Gasdurchtrittsöffnungen im Ventilverschluss oder im Ventilsitz können beispielsweise zylindrische oder sich in Gasströmungsrichtung konisch verengende Durchgänge sein, deren Durchmesser - bei konischen Durchgängen deren maximaler Durchmesser - 0,5 bis 5 mm, bevorzugt 0,9 bis 3 mm beträgt.

Der Ventilverschluss und/oder der Ventilsitz ist bevorzugt aus Kunststoff gefertigt, wobei Thermoplast gegenüber Duroplast bevorzugt ist. In diesem Fall können die Gasdurchtrittsöffnungen beim Spritzgießen des Ventilverschlusses und/oder des Ventilsitzes mit eingeformt werden und die Länge/Höhe der Gasdurchtrittsöffnung ergibt sich im wesentlichen aus der Höhe des Ventilverschlusses bzw. des Ventilsitzes, die im allgemeinen zwischen 1 und 15 mm, bevorzugt zwischen 2 und 15 mm beträgt.

Ebenso ist es möglich, den Ventilverschluss und/oder den Ventilsitz aus Metall herzustellen, vor allem aus Blech, insbesondere aus Stahlblech. Die Gasdurchtrittsöffnung kann in diesem Fall allein von einem, z.B. ausgestanzten, Durchgang im Blech gebildet werden. Es ist - insbesondere bei konischen Gasdurchtrittsöffnungen - aber auch möglich, das Blech so umzuformen, dass sich verengende Erhebungen entstehen, deren Enden bei diesem Umformprozess aufgerissen werden, also ähnlich der Herstellung der Erhebungen eines Spießbleches. Bei metallischen Ventilverschlüssen oder Ventilsitzen beträgt die Höhe der Gasdurchtrittsöffnungen vorteilhafterweise zwischen 0,2 und 10 mm, bevorzugt zwischen 0,5 und 5 mm.

Damit wird erfindungsgemäß ein Bypassventil und ein Flüssigkeitsabscheider im selben Bauelement integriert, wodurch sich eine geringe Teilezahl bei gleichzeitig geringem Bauraumbedarf ergibt. Die Bypassfunktion wird zugleich mit der Ölabscheidefunktion verwirklicht.

Durch den geringen Bauraumbedarf und die geringe Teilezahl ergibt sich eine erhebliche Kostenersparnis. Das erfindungsgemäße Ventil ist dabei zusätzlich ohne weiteres auf verschiedene funktionelle und konstruktive Anforderungen abzustimmen, da durch die geringe Teilezahl das Ventil skalierbar ist und einen modularen Aufbau ermöglicht. So können beispielsweise je nach den Anforderungen für die zu tolerierende Druckdifferenz zwischen Druck- und Saugseite des Ventils Ventilverschlüsse oder Ventilsitze mit einer unterschiedlichen Anzahl an Gasdurchtrittsöffnungen verwendet werden. Die einzelnen Gasdurchtrittsöffnungen können weiterhin unterschiedlich dimensioniert sein und so unterschiedliche Gasvolumenströme durchlassen. Damit wird auch die über diese Gasdurchtrittsöffnungen abfallende Druckdifferenz eingestellt. Erfindungsgemäß kann der Ventilverschluss elastisch, insbesondere federnd gelagert, vorgespannt sein, insbesondere in Richtung zur Schließung des Ventils vorgespannt sein. In diesem Fall hebt der federverspannte Ventilverschluss bei einer erhöhten Druckdifferenz über das Ventil von seinem Dichtsitz ab und erlaubt dann einen Bypass des Gasstroms um die Gasdurchtrittsöffnungen herum.

Die vorliegende Erfindung ermöglicht eine gleichmäßige Verpressung des Ventilverschlusses auf dem Ventilsitz und damit eine ebene Auflage auf dem Dichtsitz. Dies ermöglicht weiterhin eine hohe Dichtigkeit des Bypassventils.

Die elastische Lagerung des Ventilverschlusses kann beispielsweise mittels Federn, Biegebalken, als Zungenventil, mittels mäanderförmiger Federn, mittels Spiralfedern oder auch mittels einer elastischen Gummischeibe erfolgen. Durch die Wahl und Dimensionierung des elastischen Mittels zur Vorspannung des Ventilverschlusses in Richtung des Ventilsitzes ist eine Anpassung an die Eigenschaften und Besonderheiten der jeweiligen Situation, beispielsweise des jeweiligen Motors möglich. Wird eine progressive Feder verwendet, so kann der Druckverlauf weiter verbessert werden. Auch die Verwendung eines degressiven Federelements ist zur Erzielung eines gewünschten Druckverlaufs möglich.

Aufgrund der geringen Teilezahl und der prinzipbedingten einfachen mechanischen Konstruktion ist ein Verbau der einzelnen Teile, insbesondere der Feder, ohne jegliche Schweißprozesse und dergleichen möglich, beispielsweise mittels Schnapphakenverbindung. Damit ist auch der Montageprozess des erfindungsgemäßen Ventils sehr einfach und kostengünstig.

Eine weitere Möglichkeit, den Ventilverschluss auf dem Ventilsitz elastisch zu lagern, besteht in der Verwendung eines Ventilverschlusses in Form eines Ventiltellers, der außerhalb der Ventilöffnung auf oder an dem Ventilsitz befestigt ist. Im Bereich zwischen der Befestigung, die konzentrisch um die Ventilöffnung erfolgen kann, und der Ventilöffnung kann der Ventilverschluss Durchbrechungen, insbesondere Schlitze, aufweisen, die ein Abheben des mittleren Teils des Ventiltellers von der Ventilöffnung bei Überschreiten eines vorbestimmten Differenzdruckes zwischen der Druckseite und der Saugseite des Ventils ermöglichen. Diese Aufhängung des Ventiltellers in Art einer Tellerfeder bewirkt zugleich, dass beim Abheben des Ventiltellers von der Ventilöffnung die Durchbrechungen, beispielsweise Schlitze, sich öffnen, beispielsweise als Spalt, und als Gasdurchtrittsöffnungen einen weiteren Gasströmungsweg, beispielsweise einen Bypass, zu öffnen. Die Schlitze sind dabei vorteilhafterweise als um die Ventilöffnung konzentrisch umlaufende Kreisbogenabschnitte ausgebildet.

Um ein in Abhängigkeit vom Differenzdruck zwischen Druck- und Saugseite mehrstufiges Abheben des Ventiltellers und mehrstufiges Öffnen zusätzlicher Bypass-Öffnungen (z.B. Schlitze) zu ermöglichen, kann der Ventilteller auch mehrere in radialer Weise zueinander beabstandet angeordnete Bereiche aufweisen, die derartige Durchbrechungen aufweisen. Je nach Auslegung der Durchbrechungen erfolgt dann zuerst das Abheben des innersten Teils des Ventiltellers von der Ventilöffnung unter gleichzeitiger Öffnung eines ersten durchbrochenen Bereiches in Form von Bypass-Öffnungen. Bei weiter zunehmendem Differenzdruck zwischen Druck- und Saugseite des Ventils hebt dann ein größerer Bereich des Ventiltellers unter Öffnung noch weiterer weiter außen am Ventilteller angeordneter Durchbrechungen von der Ventilöffnung ab.

Durch Variation des Verhältnisses zwischen Ventilverschlussgröße und Bypassspaltbreite kann die Abscheideleistung an dem Bypassspalt selbst eingestellt werden. Bei schmalem Spalt und großem Ventilteller erfolgt auch im Bypassbetrieb eine Ölnebel- und Öltröpfchen-Abscheidung am Bypassspalt. Bei kleinerem Ventilteller und größerem Bypassspalt ist die Abscheideleistung geringer, obwohl der gesamte Durchströmungsquerschnitt des Bypassventils zum vorigen Beispiel unverändert sein kann.

Erfindungsgemäß können in den Gasdurchtrittsöffnungen Flüssigkeitsabscheideelemente (erste Flüssigkeitsabscheideelemente) eingesetzt oder mit diesen einteilig ausgeführt sein. Diese Flüssigkeitsabscheideelemente bewirken dann im Normalbetrieb des Ventils bei geschlossenem Ventil eine verbesserte Flüssigkeitsabscheidung, beispielsweise Ölnebel- und Öltröpfchen-Abscheidung. Die Flüssigkeitsabscheideelemente können dabei in allen oder auch nur in einem Teil der Gasdurchtrittsöffnungen angeordnet sein.

Ein, mehrere oder alle dieser Flüssigkeitsabscheideelemente können jeweils einen gemeinsamen Auslass für das Gas und die abgeschiedene Flüssigkeit aufweisen.

Erfindungsgemäß werden weitere, zweite Abscheideelemente unmittelbar hinter der jeweiligen Gasdurchtrittsöffnung (d.h. saugseitig) angeordnet. Hierfür eignen sich beispielsweise Prallplatten oder Vliese, an denen Flüssigkeiten, wie Öltröpfchen und Ölnebel, nach Durchtritt durch die Gasdurchtrittsöffnung abgeschieden werden. Die Gasdurchtrittsöffnungen bilden dabei nach Art einer Düse einen Bereich, in dem die Gase auf höhere Geschwindigkeiten beschleunigt und damit für eine effektive Flüssigkeitsabscheidung vorbereitet werden.

Eines, mehrere oder alle der beweglichen zweiten Abscheideelemente können mit veränderlichem Abstand zu der jeweiligen vorgelagerten Gasdurchtrittsöffnung beweglich sein. Sie können insbesondere derart vorgespannt gelagert sein, dass sie bei Überschreiten einer vorbestimmten Druckdifferenz zwischen der Druckseite und der Saugseite des Ventils von der vorgelagerten Durchlassöffnung wegbewegt werden.

Die vorgespannt gelagerten zweiten Abscheideelemente können mittels einer Druckfeder gelagert sein.

Die Gasdurchtrittsöffnungen können einen gleichen oder einen einzeln oder gruppenweise unterschiedlichen Strömungswiderstand aufweisen. Sie können insbesondere als Düsen ausgebildet sein.

Erfindungsgemäß ist der Ventilverschluss derart vorgespannt, dass das Ventil bei Überschreiten einer vorbestimmten Druckdifferenz zwischen der Druckseite und der Saugseite des Ventils öffnet.

Bei Überschreiten einer ersten vorbestimmten Druckdifferenz kann mindestens eine weitere Gasdurchtrittsöffnung in dem Ventilsitz und/oder in dem Ventilverschluss, insbesondere ein Spalt, insbesondere ein Ringspalt in dem Ventilverschluss oder zwischen Ventilsitz bzw. Wandung und Ventilverschluss geöffnet werden.

Bei Überschreiten einer zweiten, verglichen mit der ersten vorbestimmten Druckdifferenz größeren, vorbestimmten Druckdifferenz kann ein weiterer Spalt, insbesondere ein weiterer Ringspalt in dem Ventilverschluss und/oder zwischen Ventilsitz bzw. Wandung und dem Ventilverschluss geöffnet werden.

Der Ventilverschluss kann mittels einer Druckfeder gelagert sein. Die Kraft-Weg-Kurve der Druckfeder kann beim Zusammendrücken und damit Öffnen des Ventils progressiv verlaufen.

In Strömungsrichtung des Gases hinter dem Spalt zwischen der Ventilöffnung und dem Ventilauslass längs des Spaltes zwischen der Ventilöffnung und dem Ventilverschluss oder längs des Randes der Ventilöffnung und/oder des Ventilverschlusses können weitere Abscheideelemente, insbesondere Prallabscheideelemente wie Prallplatten, Vliese oder dergleichen, angeordnet sein.

Eines, mehrere oder alle der weiteren Abscheideelemente können mit veränderlichem Abstand zur Ventilöffnung beweglich sein.

Eines, mehrere oder alle der beweglichen weiteren Abscheideelemente können derart vorgespannt gelagert sein, dass sie bei Überschreiten einer vorbestimmten Druckdifferenz zwischen der Druckseite und der Saugseite des Ventils von der vorgelagerten Ventilöffnung wegbewegt werden.

Die vorgespannt gelagerten weiteren Abscheideelemente können mittels einer Druckfeder gelagert sein.

Auch in Gasströmungsrichtung gesehen hinter der Bypassöffnung können derartige Flüssigkeitsabscheideelemente, beispielsweise Prallplatten oder Vliese, angeordnet sein, so dass sich auch im Bypassbetrieb eine gewisse Flüssigkeitsabscheideleistung ergibt.

Das erfindungsgemäße Ventil kann als solches oder auch als Element in weiteren Bauteilen, beispielsweise in eine Ventilhaube als Ölabscheideventil, eingesetzt werden. Als Flüssigkeitsabscheideelemente, die in die Gasdurchtrittsöffnungen eingesetzt werden können oder innerhalb dieser einstückig mit den Gasdurchtrittsöffnungen ausgeführt werden können, eignen sich schneckenförmige Segmente, die wie in der DE 10 2004 037 157 A1 beschrieben ausgebildet sein können.

Die in der vorliegenden Erfindung verwendeten Flüssigkeitsabscheideelemente können also wie die in der DE 10 2004 037 157 A1 gezeigten Flüssigkeitsabscheideelemente innerhalb der Gasdurchtrittsöffnungen mindestens ein schneckenförmiges Segment aufweisen, dessen Schraubenfläche mit der Innenwandung der Gasdurchtrittsöffnung einen schneckenförmigen Strömungsweg für das Gas bildet. Das schneckenförmige Segment kann eine Länge kleiner oder gleich dem 0,5-fachen der Steigung des schneckenförmigen Segmentes aufweisen und gegebenenfalls mit dem Wandelement einteilig bzw. einstückig ausgebildet sein.

Innerhalb einer Gasdurchtrittsöffnung können erfindungsgemäß auch zwei derartige schneckenförmige Segmente bzgl. der Gasdurchtrittsrichtung hintereinander angeordnet sein, wobei vorteilhafterweise der Drehsinn der Strömungswege in den jeweiligen hintereinander angeordneten schneckenförmigen Segmenten zur Minimierung des Strömungswiderstandes gleichsinnig oder zur Verbesserung der Abscheideleistung gegensinnig (gegenläufig) ist.

Sind zwei oder mehrere der schneckenförmigen Segmente bzgl. der Gasdurchtrittsrichtung hintereinander in einer Gasdurchtrittsöffnung angeordnet, so kann die auslassseitige Kante der Schraubenfläche des im Strömungsweg vorderen schneckenförmigen Elementes und die einlassseitige Kante der Schraubenfläche des in der gleichen Gasdurchtrittsöffnung befindlichen unmittelbar folgenden schneckenförmigen Elementes gegeneinander verdreht sein, vorteilhafterweise um 0°, 45°, 90° oder 135°.

Im Folgenden werden nun einige Beispiele erfindungsgemäßer Ventile bzw. Flüssigkeitsabscheider, insbesondere zur Verwendung in erfindungsgemäßen Entlüftungssystemen und Verbrennungsmotoren dargestellt. Dabei werden für gleiche und ähnliche Elemente gleiche und ähnliche Bezugszeichen verwendet, so dass deren zweite und weitere Verwendung nicht weiter erläutert wird.

In den nachfolgenden Beispielen und Figuren sind weiterhin einzelne erfindungsgemäße Weiterentwicklungen teilweise in Kombination miteinander dargestellt, wobei jedoch jede einzelne dieser Weiterentwicklungen und jedes einzelne dieser Elemente als solches eine eigene Weiterentwicklung darstellt, auch unabhängig von den weiteren Elementen des jeweiligen Beispiels.

Es zeigen

Figuren
- 1 bis 6: verschiedene Ausführungsformen der vorliegenden Erfindung;
- Figur 7: den Druckabfall in Abhängigkeit vom Volumenstrom über ein erfindungsgemäßes Ventil, wie in Figur 1 dargestellt, bei unterschiedlichen Federraten bzw. mit fixiertem Ventilverschluss zur Lagerung des Ventiltellers; und
- Figuren 8 bis 17: weitere verschiedene Ausführungsformen der vorliegenden Erfindung.

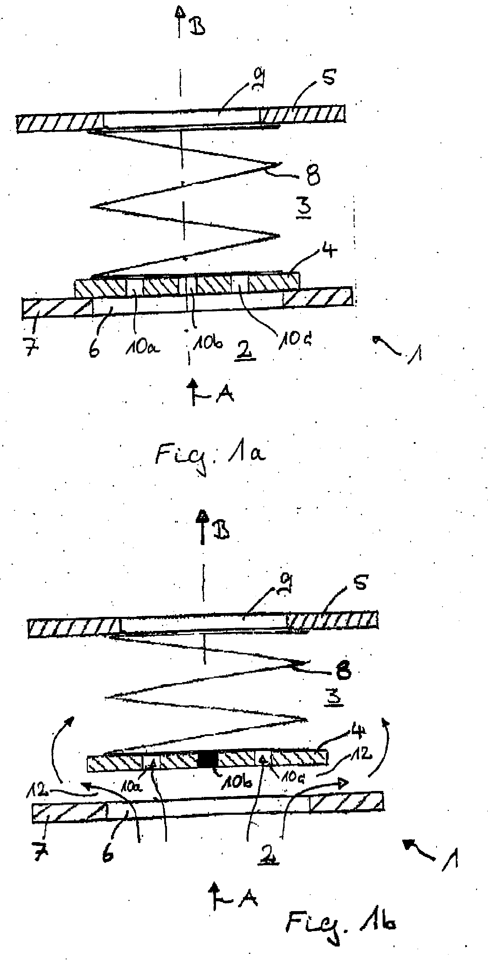

Figur 1a zeigt ein Ventil 1, das eine Grundplatte bzw. einen Ventilsitz 7 aufweist. Der Ventilsitz 7 weist eine Ventilöffnung 6 auf, durch die ein Gas von einer ersten Druckseite 2 des Ventils auf eine zweite Saugseite 3 des Ventils strömen kann, sofern eine Druckdifferenz zwischen der Druckseite 2 und der Saugseite 3 des Ventils 1 vorliegt. Die Ventilöffnung 6 wird gegebenenfalls mittels eines Ventiltellers 4 verschlossen. Dieser Ventilteller 4 liegt auf dem Ventilsitz 7 auf. In Figur 1 ist der Ventilteller 4 über eine elastische Spiralfeder 8 auf einem Ventillager 5 abgestützt, das eine Gasdurchgangsöffnung 9 aufweist. Durch die Spiralfeder 8 als Druckfeder wird der Ventilteller in Richtung auf die Ventilöffnung hin vorgespannt, so dass der Ventilteller 4 von dem Ventilsitz 7 erst beim Überschreiten einer bestimmten Druckdifferenz zwischen der Druckseite 2 und der Saugseite 3 von dem Ventilsitz 7 abhebt und die Ventilöffnung 6 freigibt. Ein Einbau ohne Vorspannung, so dass die Bauhöhe der unverpressten Feder im geschlossenen Zustand des Ventils genau dem Abstand zwischen Ventilteller 4 und Ventillager 5 entspricht, ist selbstverständlich auch möglich.

In dem Ventiltellerlager 5 ist eine Öffnung 9 angeordnet, so dass das längs des Pfeiles A zuströmende Gas über die Ventilöffnung 6 und die Öffnung 9 in dem Ventillager 5 in Richtung des Pfeiles B strömen kann. Die Pfeilrichtung gibt zugleich die Längsrichtung einer Kurbelgehäuse-Entlüftungsleitung an, in der das dargestellte Ventil 1 seitlich bündig schließend eingebaut sein kann.

Erfindungsgemäß weist nun der Ventilteller 4 Gasdurchtrittsöffnungen 10a, 10b und 10c auf, über die auch im geschlossenen Zustand des Ventils 1 Gas von der Druckseite 2 auf die Saugseite 3 und dann weiter durch die Öffnung 9 des Ventiltellerlagers 5 strömen kann. Diese Öffnungen 10a, 10b und 10c sorgen bei geringer Druckdifferenz zwischen der Druckseite 2 und der Saugseite 3 und bei geringen Volumenströmen der über das Ventil zu verbringenden Gase für einen Durchlass zwischen der Druckseite 2 und der Saugseite 3. Dadurch, dass der gesamte Querschnitt der Leitung sich in diesen Öffnungen 10a, 10b und 10c verringert, wirken diese Öffnungen zugleich als Düsen, die eine eigene Flüssigkeitsabscheidefunktion, insbesondere eine Ölabscheidefunktion, erfüllen.

Figur 1b zeigt dieselbe Ausführungsform des Ventils 1, nun allerdings nachdem - aus welchen Gründen auch immer - die Öffnung 10b blockiert ist, im geöffneten Zustand. Die Pfeile deuten an, dass das Gas sowohl durch die Öffnungen 10a, 10c als auch durch die Bypassöffnung 12 des Ventils strömt.

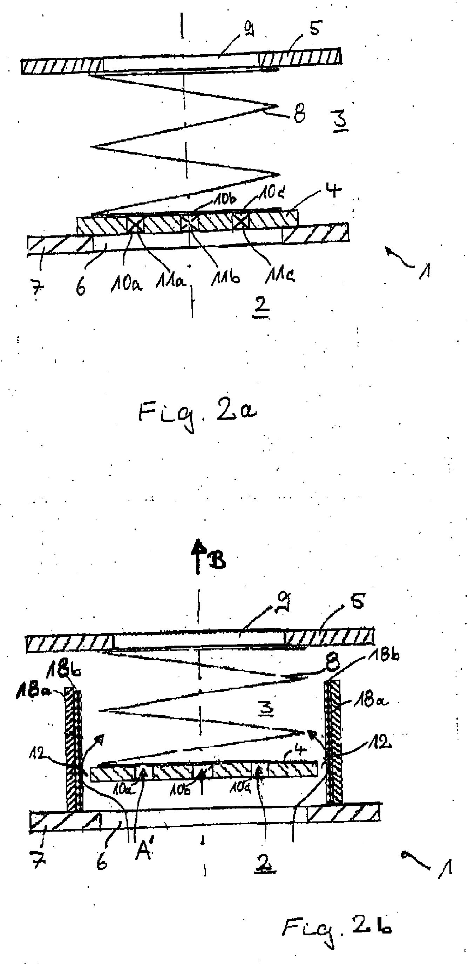

Diese erfindungsgemäße Ausführungsform kann weitergebildet werden, indem wie in Figur 2a dargestellt, in den Gasdurchtrittsöffnungen 10a, 10b und 10c separate Flüssigkeitsabscheideelemente 11a, 11b und 11c angeordnet werden. Als solche Flüssigkeitsabscheideelemente 11a, 11b und 11c eignen sich die oben beschriebenen schneckenförmigen Segmente bzw. Abfolgen derartiger schneckenförmiger Segmente. Selbstverständlich können diese Abscheideelemente auch mit dem Ventilteller 4 einstückig ausgebildet sein. Durch eine derartige Anordnung zusätzlicher Flüssigkeitsabscheideelemente 11a, 11b und 11c in den Durchtrittsöffnungen 10a, 10b und 10c wird eine verbesserte Abscheideleistung des Ventils 1 im geschlossenen Zustand erreicht.

Hier ist nun eine einfache modulare Anpassung des erfindungsgemäßen Ventils an die jeweiligen Charakteristika des jeweiligen Motors bzw. des jeweiligen Gasstromes durchführbar, indem in dem Ventilteller 4 eine angepasste Anzahl von Gasdurchtrittsöffnungen, die keine Abscheideelemente aufweisen, und eine angepasste Anzahl an Gasdurchtrittsöffnungen, in denen zusätzliche Abscheideelemente angeordnet oder die spezifisch als Abscheideelement ausgebildet sind, vorgesehen werden.

Figur 2b zeigt eine Ausführungsform, bei der die Abscheideelemente nicht in den Durchtrittsöffnungen 10a, 10b und 10c angebracht sind, sondern im Bereich der Bypassöffnung 12. Die Platten 18 umgeben den Ventilteller 4 geschlossen, so dass bei geöffnetem Ventil die Gase zumindest teilweise durch den Bypass hindurch treten und dabei über die Oberfläche der Platten 18 strömen. Die Platten 18 sind hier zweilagig ausgeführt mit einer durchlässigen Vliesschicht 18b auf einer undurchlässigen Schicht 18a. Diese Vliesschicht 18b ist längs der Wandung der Plattenschicht 18a und längs der spaltförmigen Bypassöffnung 12 umlaufend angeordnet. Das Entlangströmen der ölbeladenen Gase an der Oberfläche der Platte 18 und durch die Oberflächenschicht des Vlieses 18b hindurch sorgt hier für die Abscheidung des Öls. Auch wenn es zur Führung des Ventiltellers 4 möglich wäre, dass die Platten 18 bündig an den Ventilteller 4 anschließen, halten die Platten 18 in diesem Beispiel einen geringen Mindestabstand von dem Vlies 18b ein, so dass auch bei vollständig zugesetztem Vlies 18b noch ein Durchfluß möglich ist.

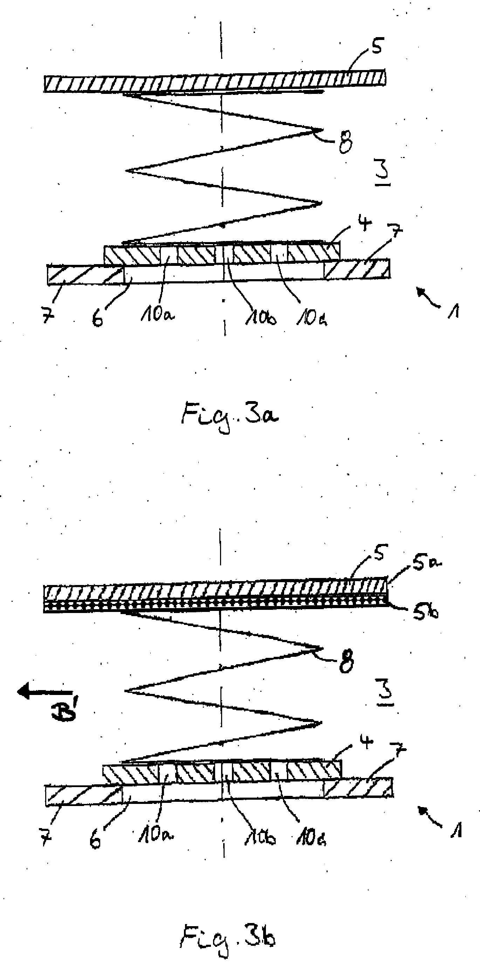

Figur 3a zeigt ein weiteres Ausführungsbeispiel eines erfindungsgemäßen Ventils 1 gemäß Fig. 1, wobei hier jedoch das Ventiltellerlager 5 ohne Öffnung 9 ausgebildet ist. Das Ventiltellerlager 5 ist seinerseits nun beispielsweise in Form eines stabilen permeablen Vlieses oder Maschennetzes ausgebildet, so dass das Lager 5 als Flüssigkeitsabscheideelement wirkt. Dieses ist den Gasdurchtrittsöffnungen 10a, 10b und 10c nachgeschaltet, so dass der durch diese Gasdurchtrittsöffnungen 10a, 10b und 10c hindurch tretende und beschleunigte Gasstrom auf das Lager 5 trifft und dort Flüssigkeit aus diesem Gasstrom beim Durchtritt durch das Lager 5 abgeschieden wird.

Figur 3b zeigt eine Variante des vorgenannten Ausführungsbeispiels, bei dem das Ventiltellerlager 5 eine für Gas und Flüssigkeit undurchlässige Schicht 5a, sowie, dem Gasstrom zugewandt, eine permeable Schicht 5b, etwa ein Vlies umfasst. Die ölbeladenen Gase strömen zu dieser permeablen Schicht 5b und treten in diese ein. Die Partikel werden im Vlies 5b abgeschieden, das Gas tritt wieder in den Innenraum 3 des Ventils 1 zurück. Anders als in den vorgenannten Ausführungsformen erfolgt die Weiterleitung des Gases nicht in Fortführung der Gasdurchtrittsrichtung B durch die Durchgangsöffnungen 10a, 10b, 10c, sondern in Richtung B', also quer dazu, nachdem das Ventiltellerlager 5 undurchlässig ist.

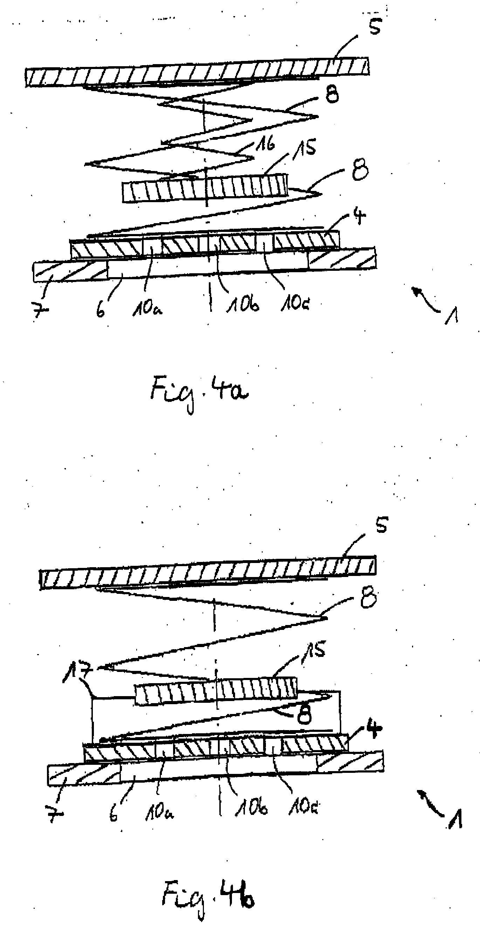

In Figur 4a ist die Ausführungsform nach Figur 3a dahingehend weiter gebildet, dass in Durchströmungsrichtung hinter den Gasdurchtrittsöffnungen 10a, 10b und 10c, d.h. saugseitig zu den Gasdurchtrittsöffnungen 10a, 10b und 10c, ein weiteres Flüssigkeitsabscheideelement 15 angeordnet ist. Dies ist beispielsweise eine Prallplatte oder ein Vlies. Statt eines einzelnen weiteren Flüssigkeitsabscheideelementes 15 könnten jedoch auch für einzelne Gasdurchtrittsöffnungen oder einzelne Gruppen hiervon eigene Flüssigkeitsabscheideelemente oder auch keine Flüssigkeitsabscheideelemente vorgesehen sein.

Das in Fig. 4a dargestellte weitere Flüssigkeitsabscheideelement 15 ist mittels einer Spiralfeder 16 elastisch ebenfalls auf dem Ventillager 5 gelagert. In Abhängigkeit von der Geschwindigkeit und der Stärke des durch die Öffnungen 10a, 10b und 10c strömenden Gasstromes wird das Abscheideelement 15 gegen die Feder 16 von den Gasdurchtrittsöffnungen 10a, 10b und 10c weg gedrückt. Dadurch ergibt sich ein variabler Abstand des Abscheideelementes 15 von dem Ventilteller 4 und den Gasdurchtrittsöffnungen 10a, 10b und 10c. Hierdurch lässt sich die Abscheideintensität und der Druckverlust durch das Abscheideelement 15 in Abhängigkeit vom Gasvolumenstrom regeln. Nachdem bei diesem Ausführungsbeispiel beide Federn 8, 16 sowie die Größe der Platte 15 unabhängig voneinander gewählt werden können, ist es besonders leicht und vielseitig skalierbar.

Figur 4b stellt eine weitere Variante ähnlich dem in Fig. 4a dargestellten Ventil dar. Bei diesem Ventil 1 ist jedoch das Abscheideelement 15 nicht über eine Feder separat gelagert. Vielmehr ist das Abscheideelement 15 über ein Gestänge 17 fest mit dem Ventilteller 4 verbunden, wodurch sich der Abstand zwischen diesen beiden Elementen 4 und 15 nicht verändert. Dies erlaubt die Verwendung dieses Ventils in Verbindung mit einem Abscheideelement in Form eines Prallabscheiders, bei dem die Beschleunigung in der Gasdurchtrittsöffnung 10a, 10b und 10c mit dem Aufprall auf der Platte 15 zusammenwirkt. Wie die Platte 5 in den Ausführungsbeispielen gemäß Figuren 3a, 3b kann auch die Platte 15 ein- oder mehrlagig, permeabel oder undurchlässig ausgeführt sein.

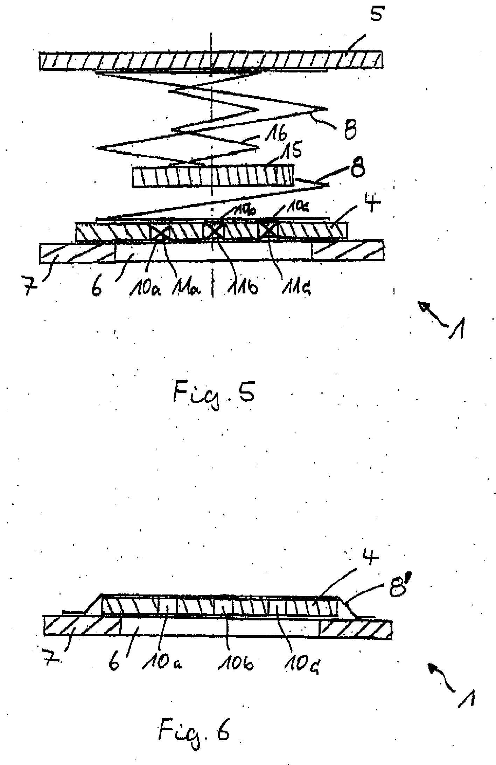

Figur 5 zeigt ein weiteres Ausführungsbeispiel, bei dem das Ausführungsbeispiel der Figur 4a dadurch ergänzt wurde, dass nunmehr auch in den Gasdurchtrittsöffnungen 10a, 10b und 10c weitere Abscheideelemente 11a, 11b und 11c separat oder einstückig mit den Gasdurchtrittsöffnungen 10a, 10b und 10c angeordnet sind. Dadurch erfolgt nun eine doppelte Flüssigkeitsabscheidung in den Gasdurchtrittsöffnungen 10a, 10b und 10c und diesen nachgeschaltet in dem weiteren Abscheideelement 15.

Figur 6 zeigt einen Querschnitt eines weiteren Ventils, das prinzipiell dem Aufbau des Ventils 1 aus Figur 1 entspricht. Allerdings wird in Figur 6 der Ventilteller 4 nicht durch eine Spiralfeder vorgespannt, sondern mittels einer federnden Metallzunge 8', die ihrerseits an dem Ventilsitz 7 befestigt ist. Auch bei diesem Ausführungsbeispiel kann sich der Ventilteller 4 von dem Ventilsitz 7 abheben, ist jedoch in Richtung des Ventilsitzes 7 vorgespannt. Hier ist zu beachten, dass die Metallzunge 8' keineswegs vollflächig den Ventilteller 4 überdecken und die Gasdurchtrittsöffnungen 10a, 10b und 10c verschließen muss. Vielmehr kann es sich auch lediglich um eine oder mehrere schmale Metallzungen 8' handeln, die lediglich in der Querschnittsdarstellung auch die Gasdurchtrittsöffnungen 10a, 10b und 10c zu überdecken scheinen. Wesentlich ist die Elastizität im Flankenbereich.

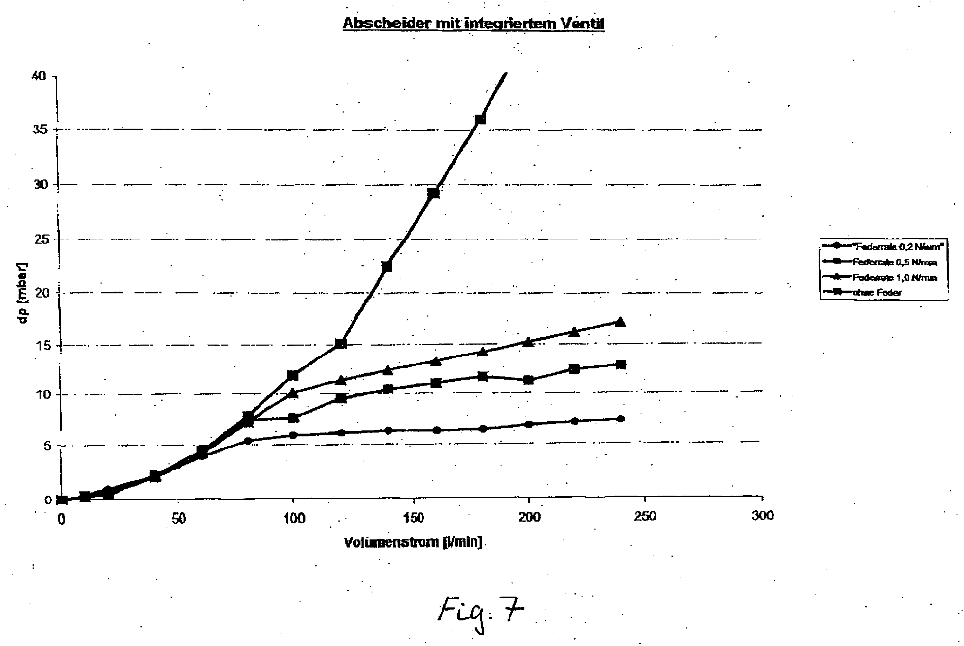

Figur 7 zeigt den Verlauf des Druckabfalls über das Ventil 1 der Figur 1, wobei vier verschiedene Ventile gemessen wurden. Zum einen wurde ein Ventil mit fixierter Lagerung des Ventiltellers 4 gemessen (Kurve "ohne Feder"). Bei steigendem volumenstrom steigt bei diesem der Druckabfall über das Ventil stark an.

Die weiteren drei Ventile weisen eine federnde, bewegliche Lagerung wie in Figur 1 auf, wobei die Federrate der Feder 8 unterschiedlich groß gewählt wurde.

Wie in Figur 7 zu erkennen ist, steigt bei den Ventilen mit federnder Lagerung zuerst der Druckabfall wie für das Ventil mit fixiertem Ventilteller mit dem Volumenstrom an, wobei dann jedoch der weitere Anstieg des Druckabfalls begrenzt ist. Diese Begrenzung erfolgt durch das Abheben des Ventiltellers 4 von dem Ventilsitz 7 und der Freigabe eines Spaltes zwischen der Ventilöffnung 6 und dem Ventilteller 4, der zu einer Umströmung des Ventiltellers 4 führt. Es ist in

Figur 7 zu erkennen, dass dieses Abheben des Ventiltellers bei Verwendung der Feder mit der niedrigsten Federrate von 0,2 N/ml bereits bei einem Gasvolumenstrom von ca. 60 l/min erfolgt, während bei Verwendung einer Feder mit höherer Federrate (0,5 N/mm bzw. 1,0 N/mm) ein derartiges Abheben erst bei ca. 80 bis 100 l/min erfolgt. Durch Wahl einer geeigneten Feder kann damit die Charakteristik des Ventils geeignet gewählt werden.

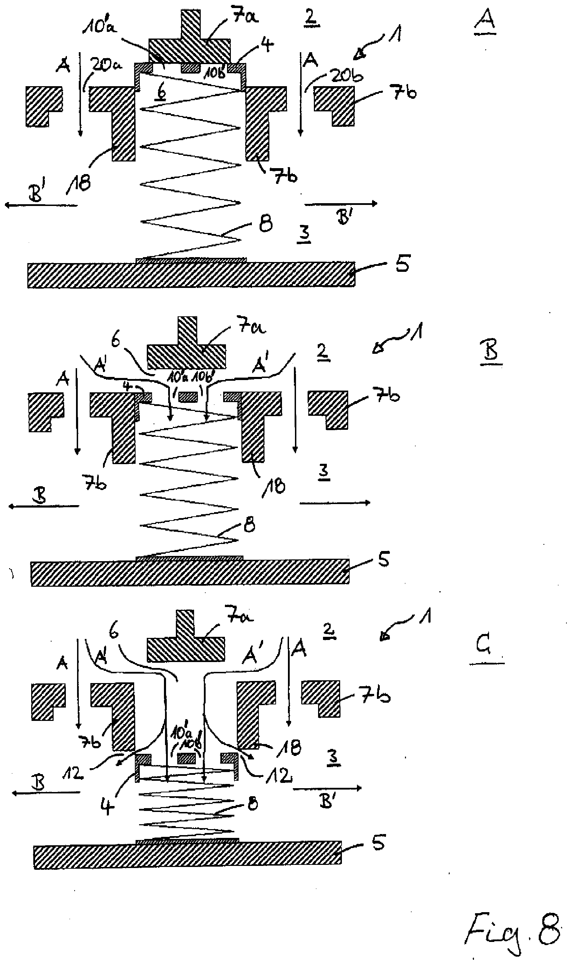

Figur 8 zeigt in drei Teilbildern A, B und C eine weitere Variante eines erfindungsgemäßen Ventils 1. Die Darstellung in Figur 8 ist als Schnittansicht (bezüglich der Feder 8 jedoch als Aufsicht) dargestellt. Dieses Ventil 1 besitzt einen Ventilsitz, der zwei Teilelemente 7a und 7b aufweist. Der Ventilsitz weist ein mittiges Element 7a auf, auf dem der Ventilverschluss 4 bei geschlossenem Ventil aufliegt. Der Ventilverschluss 4 wird dabei durch die Feder 8 in Richtung des Ventilsitzelementes 7a vorgespannt. Der Ventilsitz weist ein weiteres Element 7b auf, das eine Wandung 18 besitzt, innerhalb der der Ventilverschluss 4 geführt wird. Das Element 7b des Ventilverschlusses weist Gasdurchtrittsöffnungen 20a und 20b auf, die permanent geöffnet sind und einen Gasstrom über das Ventil in Richtung des Pfeiles A und anschließend in Richtung des Pfeiles B' ermöglichen. Bereits in diesen Öffnungen 20a und 20b, die eine Verengung des Strömungsquerschnittes bewirken, wird eine in dem Gasstrom transportierte Flüssigkeit, beispielsweise Öl, abgeschieden.

Der Ventilverschluss 4 weist seinerseits Gasdurchtrittsöffnungen 10a' und 10b' auf, die allerdings im geschlossenen Zustand des Ventils 1 durch das Aufliegen des Ventiltellers 4 auf dem Element 7a des Ventilsitzes verschlossen sind. Dieser Zustand ist in Figur 8A dargestellt.

Überschreitet nun die Druckdifferenz zwischen der Druckseite 2 und der Saugseite 3 des Ventils 1 eine vorbestimmte Größe, so hebt der Ventilverschluss 4 gegen die Vorspannung der Feder 8 von dem Element 7a ab und gibt damit die Öffnungen 10a' und 10b' als weitere Gasströmungswege frei. Diese weiteren Gasströmungswege sind mit Pfeilen A' bezeichnet und in Figur 8B dargestellt.

Wird die Druckdifferenz zwischen der Druckseite 2 und der Saugseite 3 des Ventils 1 weiter erhöht und überschreitet sie ein vorbestimmtes Maß, so wird der Ventilteller 4 gegen die Vorspannung der Feder 8 so weit aus dem Ventilsitz 7b herausgedrückt, dass sich zwischen dem Ventilteller 4 und der Wandung 18 des Ventilsitzelementes 7b eine weitere Bypass-Öffnung 12 ergibt, durch die weiteres Gas durchströmen kann. Dies ist in Figur 8c dargestellt.

Durch eine derartige Anordnung und Ausbildung des Ventils 1 ist es möglich, ein mehrstufiges Schaltverhalten des Ventils 1 zu bewirken.

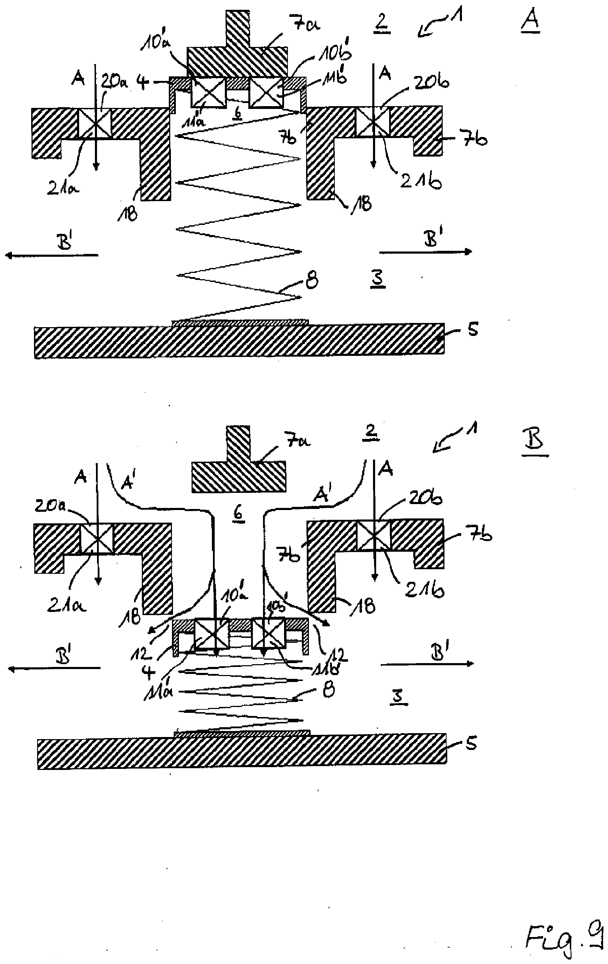

In Figur 9 ist ein prinzipiell ähnliches Ventil 1 wie in Figur 8 dargestellt, wobei hier jedoch in die Öffnungen 10a' und 10b' zur weiteren Erhöhung der Flüssigkeitsabscheidewirkung Abscheideelemente 11a' und 11b', wie oben dargestellt, eingebracht sind. Auch in die Öffnungen 20a und 20b sind Fluidabscheideelemente 21a und 21b zur Erhöhung der Abscheideeffizienz und Abscheiderate eingebracht. Die Darstellungen in Figur 9A und 9B betreffen zum einen den Zustand, bei dem das Ventil 1 geschlossen ist (Figur 9A entsprechend Figur 8A) bzw. in dem das Ventil voll geöffnet ist (Figur 9B entsprechend Figur 8C).

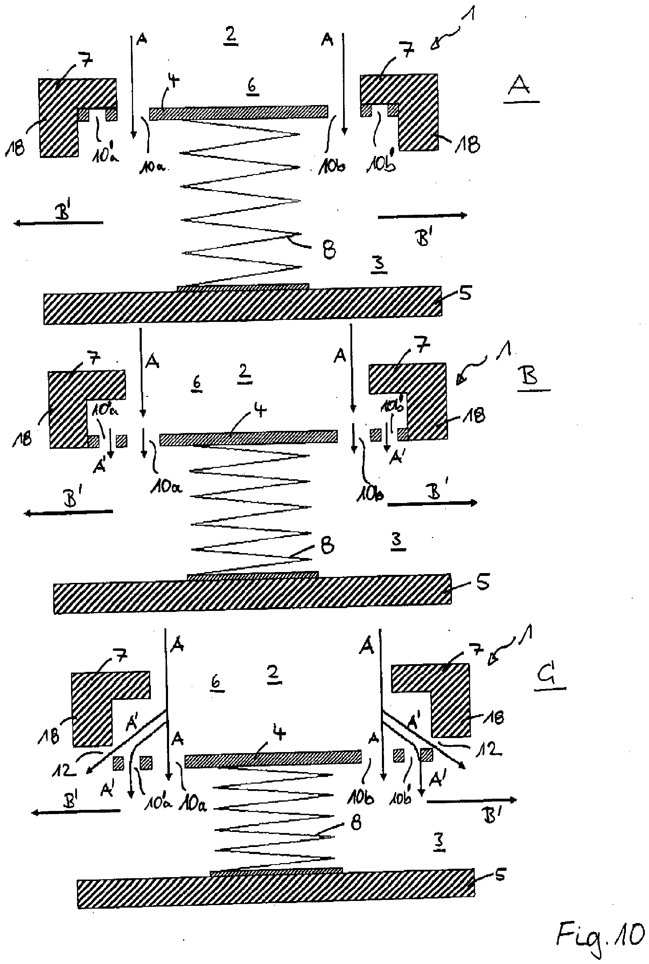

Figur 10 zeigt ein weiteres erfindungsgemäßes Ventil 1, bei dem der Ventilsitz 7 einteilig aufgebaut ist und eine Wandung 18 aufweist. In dieser Wandung 18 wird ein Ventilverschluss 4 geführt. In dem Bereich, in dem der Ventilverschluss 4 auf dem Ventilsitz 7 bei geschlossenem Ventil aufliegt, sind in dem Ventilteller 4 Öffnungen 10a' und 10b' angeordnet, die als Gasdurchtrittsöffnungen vorgesehen sind. Diese Öffnungen sind im geschlossenen Zustand des Ventils 1, wie er in Figur 10A dargestellt ist, durch den Ventilsitz 7 verschlossen. Weiterhin sind in dem Ventilverschluss 4 Öffnungen 10a und 10b angeordnet. Diese sind innerhalb der Ventilöffnung 6 positioniert, so dass sie auch bei geschlossenem Ventil 1 für den Gasdurchgang permanent geöffnet sind. Diese ermöglichen also den Gasdurchgang längs der Pfeile A und B' im Falle eines geringen Druckunterschiedes zwischen der Druckseite 2 und der Saugseite 3 bei geschlossenem Ventil 1.

Figur 10B zeigt dasselbe Ventil 1, nunmehr jedoch bei einem erhöhten Druckunterschied zwischen der Druckseite 2 und der Saugseite 3, bei dem der Ventilteller 4 bereits von dem Ventilsitz 7 abhebt, jedoch noch innerhalb der Wandung 18 des Ventilsitzes 7 geführt wird. Hier sind nun zusätzlich auch die Öffnungen 10a' und 10b' für den Gasdurchgang in Richtung der Pfeile A' geöffnet, so dass insgesamt der Druckabfall über den Ventilteller 4 verringert und der Volumenstrom erhöht wird.

Figur 10C zeigt den Zustand des Ventils 1 bei vollständig geöffnetem Ventilteller 4. Dieser ist nun gegen die Kraft der Feder 8 derart weit von dem Ventilsitz 7 abgehoben, dass sich zwischen dem Umfangsrand des Ventiltellers 4 und der Wandung 18 eine weitere ringförmige Öffnung 12 als Bypass-Öffnung mit Gaswegen A' ergibt.

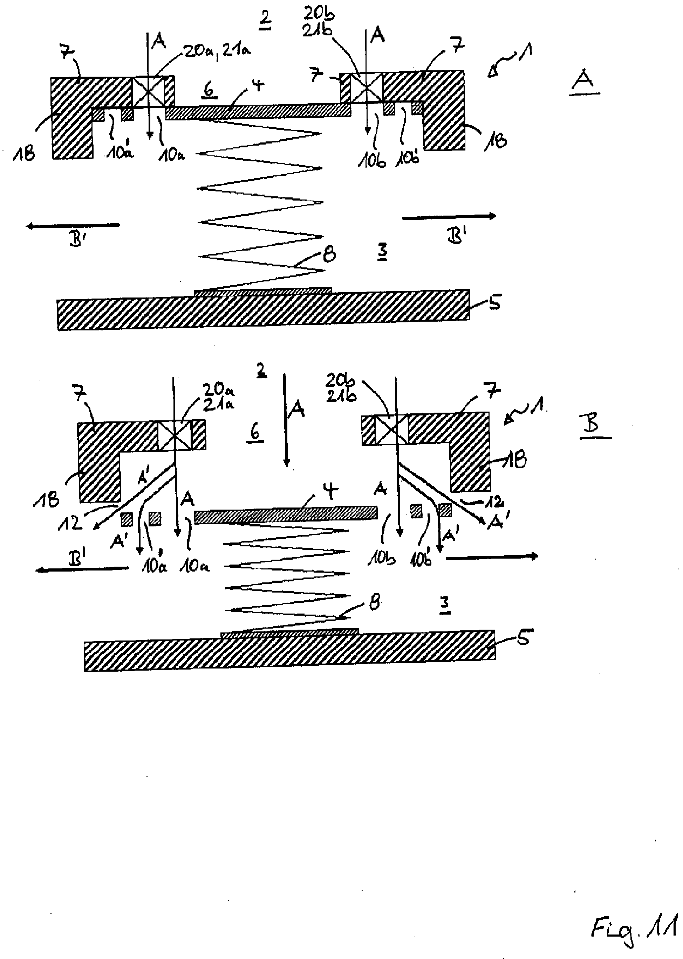

Figur 11 zeigt ein weiteres Beispiel eines erfindungsgemäßen Ventils, das grundsätzlich einen ähnlichen Aufbau wie das Ventil in Figur 10 aufweist. Allerdings sind nunmehr auch die Öffnungen 10a und 10b des Ventilverschlusses 4 grundsätzlich außerhalb der Ventilöffnung 6 angeordnet. Allerdings weist der Ventilsitz 7 im Bereich der Öffnungen 10a und 10b selbst Öffnungen 20a und 20b auf, die gemeinsam mit den Öffnungen 10a und 10b einen Gasweg von der Druckseite 2 zur Saugseite 3 des Ventils 1 auch bei geschlossenem Ventil 1, d.h. wenn der Ventilverschluss 4 auf dem Ventilsitz 7 aufliegt, ermöglichen. Zur Verstärkung der Abscheidewirkung ist in den Öffnungen 20a und 20b jeweils ein Flüssigkeitsabscheideelement 21a bzw. 21b angeordnet.

Figur 11A zeigt nun den Zustand des Ventils 1, wenn es maximal verschlossen ist. Dann sind lediglich noch die Durchgangsöffnungen 20a, 10a bzw. 20b, 10b für einen Gasdurchgang geöffnet. Dennoch findet bereits eine effektive Flüssigkeitsabscheidung statt.

In Figur 11B ist der Zustand dargestellt, bei dem der Ventilteller 4 maximal vom Ventilsitz 7 abgehoben ist. Dann sind nicht nur die Öffnungen 10a' und 10b' als Gasströmungswege längs der Pfeile A' geöffnet (so, wie in Figur 10B dargestellt), sondern auch eine weitere ringförmige Bypass-Öffnung 12 zwischen der Wandung 18 und dem Ventilteller 4 für die Gasdurchströmung längs der Pfeile A' geöffnet. Die Darstellung in Figur 11B entspricht derjenigen für das Ventil in Figur 10C.

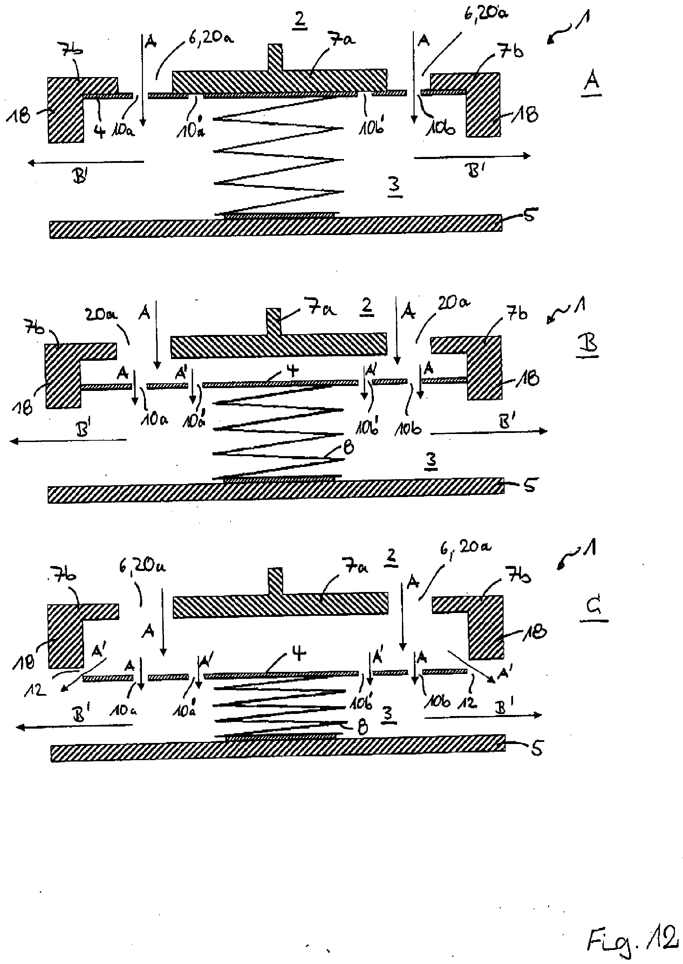

Figur 12 zeigt ein weiteres erfindungsgemäßes Ventil 1. Ähnlich wie bei dem Ventil, das in Figur 8 dargestellt ist, ist der Ventilsitz zweiteilig in Form eines Mittelteils 7a und eines Randelementes 7b aufgebaut. Die Ventilöffnung 6 besitzt hier die Gestalt einer konzentrischen Öffnung 20a, die um das Mittelelement 7a umläuft. Das äußere Element 7b besitzt eine Wandung 18, die der Führung des Ventilverschlusses 4 dient. Der Ventilverschluss 4 weist nun mehrere Öffnungen 10a und 10b auf, die im Bereich der Ventilöffnung 6, 20a angeordnet und daher in jedem Zustand des Ventils für den Gasdurchtritt längs des Pfeiles A (siehe Figur 12A) geöffnet sind. Die Öffnungen 10a, 10b können die Form von voneinander getrennten, länglichen Kreisabschnitten auf einer Linie konzentrisch zur Öffnung 20a besitzen.

Figur 12A stellt das Ventil 1 im maximal geschlossenen Zustand, d.h. lediglich mit Öffnungen 10a und 10b in geöffnetem Zustand, dar. Figur 12B zeigt das Ventil 1, wenn die Druckdifferenz zwischen der Druckseite 2 und der Saugseite 3 einen ersten vorbestimmten Druck übersteigt, so dass der Ventilverschluss 4 gegen die Vorspannung der Feder 8 von dem Ventilsitz 7a, 7b abgehoben wird.

Im Bereich des mittleren Ventilsitzelementes 7a weist der Ventilverschluss 4 weitere Öffnungen 10a' und 10b' auf, die auf dem Element 7a aufliegen und daher durch das Element 7a verschlossen sind, wenn, wie in Figur 12A dargestellt, das Ventil 1 weitestgehend verschlossen ist. Diese Öffnungen werden, wie in Figur 12B gezeigt, für eine Gasströmung in Richtung der Pfeile A' freigegeben, wenn der Ventilverschluss 4 von dem Ventilsitz 7a, 7b abhebt. In Figur 12B wird der Ventilverschluss noch durch die Wandung 18 des Ventilsitzelementes 7b geführt.

Überschreitet die Druckdifferenz zwischen der Druckseite 2 und der Saugseite 3 des Ventils 1 einen zweiten vorbestimmten Wert, so hebt der Ventilverschluss 4 von dem Ventilsitz 7a, 7b so weit gegen die Vorspannung der Feder 8 ab, dass zwischen dem Umfangsrand des Ventilverschlusses 4 und der Wandung 18 eine weitere ringförmige Umgehungsöffnung (Bypass-Öffnung) 12 freigegeben werden, durch die in Richtung der Pfeile A' Gas von der Druckseite 2 zur Saugseite 3 strömen kann. In diesem Zustand, wie er in Figur 12C dargestellt ist, ist das Ventil 1 maximal geöffnet. Durch die Wahl der Kennlinie der Feder 8 sowie der Länge der Wandung 18 in Gasströmungsrichtung kann bei diesem Ventil (ebenso wie bei den in den Figuren 8-11 dargestellten Ventilen 1) eingestellt werden, bei welchem Druckunterschied zwischen der Druckseite 2 und der Saugseite 3 des Ventils 1 Gasdurchgangsöffnungen, hier die Öffnungen 10a' und 10b', freigegeben werden und bei welchem weiteren Druckunterschied auch die Öffnungen 12 freigegeben werden.

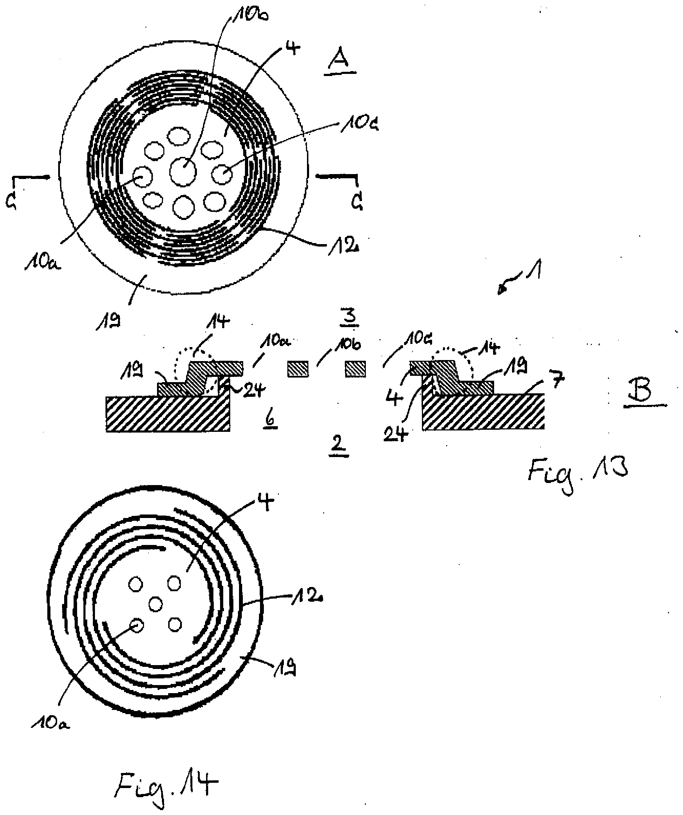

Figur 13 zeigt in Teilfigur A in Aufsicht und B im Querschnitt ein weiteres erfindungsgemäßes Ventil 1. Figur 13A zeigt dabei den Ventilverschluss 4 in Aufsicht, während Figur 13B den Ventilverschluss 4 in einem Schnitt längs der Linie C-C in Figur 13A darstellt.

Der Ventilsitz 7 weist eine mittige Ventilöffnung 6 auf, die von dem Ventilverschluss 4 überdeckt wird. Der Ventilverschluss 4 weist radial außen liegende Befestigungsbereiche 19 auf, mittels derer er an dem bzw. auf dem Ventilsitz 7 befestigt ist. Im mittleren Bereich, der über eine Stufe 14 in einem Bereich 14 gegenüber dem Befestigungsbereich 19 vorgespannt ist, besitzt der Ventilverschluss 4 Öffnungen 10a, 10b und 10c, die ständig zur Durchströmung für das Gas von der Druckseite 2 zur Saugseite 3 geöffnet sind. Diese stellen einen Grundgasstrom über das Ventil sicher und bewirken durch die Verengung der Strömungsquerschnitte in den Öffnungen 10a, 10b und 10c bereits eine grundlegende Flüssigkeitsabscheidung. Dieser mittlere Bereich ist innerhalb der Stufe 14 auf einem Flansch 24 gelagert, der in Gasströmungsrichtung aus dem Ventilsitz 7 hervorragend, die Ventilöffnung umlaufend angeordnet ist. Bei geschlossenem Ventil 1 liegt der Ventilverschluss 4 auf dem Flansch 24 auf, so dass lediglich die Öffnungen 10a, 10b, 10c für die Durchströmung des Ventils 1 offen stehen.

In dem gestuften Bereich 14 des Ventilverschlusses 4 sind nun Schlitze in Form konzentrisch um die Mitte der Öffnung 10b bzw. die Mitte der Ventilöffnung 6 angeordneter Kreisbogenabschnitte eingebracht. Diese Schlitze sind durch Ausstanzen oder Schneiden, beispielsweise Laserschneiden, in dem Ventilverschluss 4 erzeugt und weisen daher ständig eine Öffnung auf. Bei Überschreiten eines vorbestimmten Druckunterschieds zwischen der Druckseite 2 und der Saugseite 3 hebt nun der mittlere Bereich des Ventilverschlusses 4 von dem Flansch 24 ab, wodurch die Schlitze als Bypass-Öffnungen 12 freigegeben werden. Diese Schlitze bewirken also, dass der Ventilverschluss 4 mit seinem mittleren Bereich in Art einer Tellerfeder auf dem Ventilsitz 7 gelagert ist und zugleich durch die Öffnung der Schlitze 12 beim Abheben eine BypassFunktion mit gleichzeitiger Flüssigkeitsabscheidung gewährleistet ist.

Figur 14 zeigt ein weiteres Beispiel eines derartigen Ventilverschlusses 4. Es ist zu erkennen, dass hier die Schlitze 12, die sowohl Federwirkung der zwischen ihnen befindlichen Stege als auch selbst BypassFunktion herstellen, in geringerer Anzahl, jedoch weitaus länger als die Schlitze 12 in dem Ventilverschluss 4 der Figur 13 ausgebildet sind.

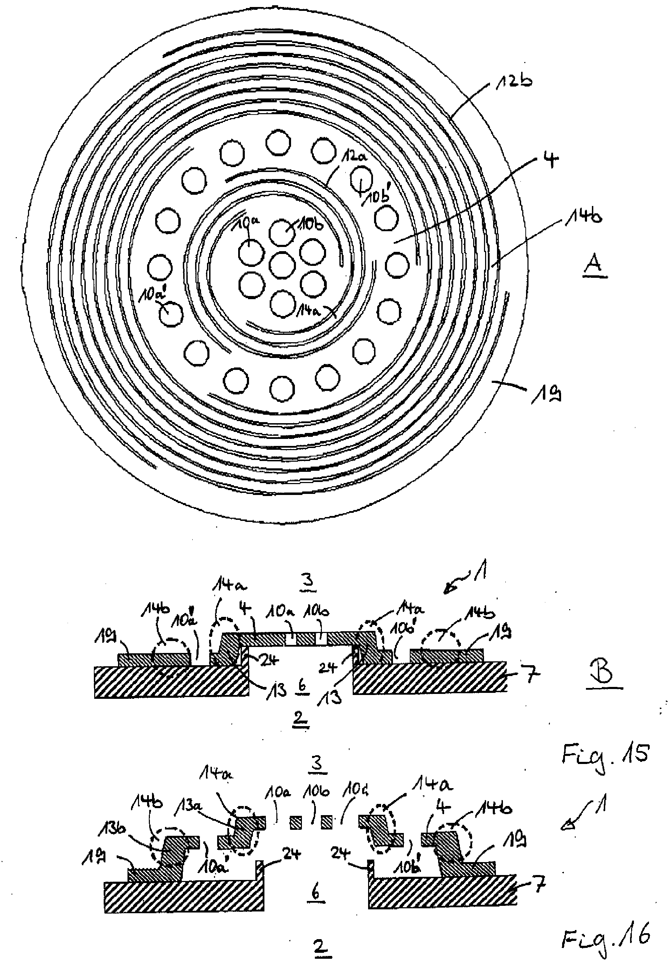

Figur 15 zeigt in den Teilbildern 15A und 15B in Aufsicht bzw. im Querschnitt ein weiteres derartiges Ventil 1 in Figur 15B bzw. dessen Ventilverschluss 4 in Figur 15A.

Der Ventilverschluss weist nun permanent für den Gasstrom geöffnete Öffnungen 10a und 10b in einem mittigen Bereich auf. Diese sind von einer ersten Schar von Schlitzen 12a in einem mit einer Stufe 13 versehenen Bereich 14a umgeben. Bei Überschreiten eines ersten Differenzdruckes zwischen der Druckseite 2 und der Saugseite 3 des Ventils 1 hebt dieser mittlere Bereich mit den Öffnungen 10a und 10b vom Ventilsitz 7 und dem Flansch 24 ab, so dass die Schlitze 12a freigegeben werden und sich öffnen und Bypass-Öffnungen für den Gasstrom freigegeben.

Die Schar von Schlitzen 12a ist außerhalb der Ventilöffnung 6 von den genannten Gasdurchtrittsöffnungen 10a', 10b' etc., umgeben. Diese liegen im weitestgehend geschlossenen Zustand des Ventils 1 auf dem Ventilsitz 7 auf und sind für den Gasstrom wegen der Auflage des Ventilverschlusses 4 auf den Flansch 24 nicht geöffnet. Weiter radial nach außen außerhalb der Gasdurchtrittsöffnungen 10a', 10b', ist eine weitere Schar von Schlitzen 12b angeordnet, die sich bei Überschreiten einer weiteren höheren Druckdifferenz zwischen der Druckseite 2 und der Saugseite 3 öffnet und dabei den mittleren Bereich einschließlich der Öffnungen 10a' und 10b' vom Ventilsitz 7 abhebt und zugleich weitere Bypass-Öffnungen 12b für den Gasstrom freigibt.

Figur 16 zeigt ein weiteres Ventil 1 ähnlich demjenigen in Figur 15, bei dem nunmehr permanent geöffnete Gasdurchtrittsöffnungen 10a, 10b und 10c im mittleren Bereich innerhalb einer ersten Schar von Schlitzen in einem Bereich 14a und weitere nicht permanent geöffnete Gasdurchtrittsöffnungen 10a' und 10b' zwischen dieser ersten Schar von Schlitzen in einem Bereich 14a und einer zweiten Schar von Schlitzen in einem Bereich 14b angeordnet sind. In Figur 16 ist das Ventil 1 in einem Zustand dargestellt, bei dem aufgrund einer ausreichend hohen Druckdifferenz zwischen der Druckseite 2 und der Saugseite 3 der Bereich zwischen den geschlitzten Bereichen 14a und 14b bereits vom Ventilsitz 7 abgehoben ist und damit die Öffnungen 10a' und 10b' freigegeben sind. Mittels der Stufen 13a und 13b in den Bereichen 14a und 14b wird auch hier ein gestuftes Öffnungsverhalten des Ventils 1 bewirkt.

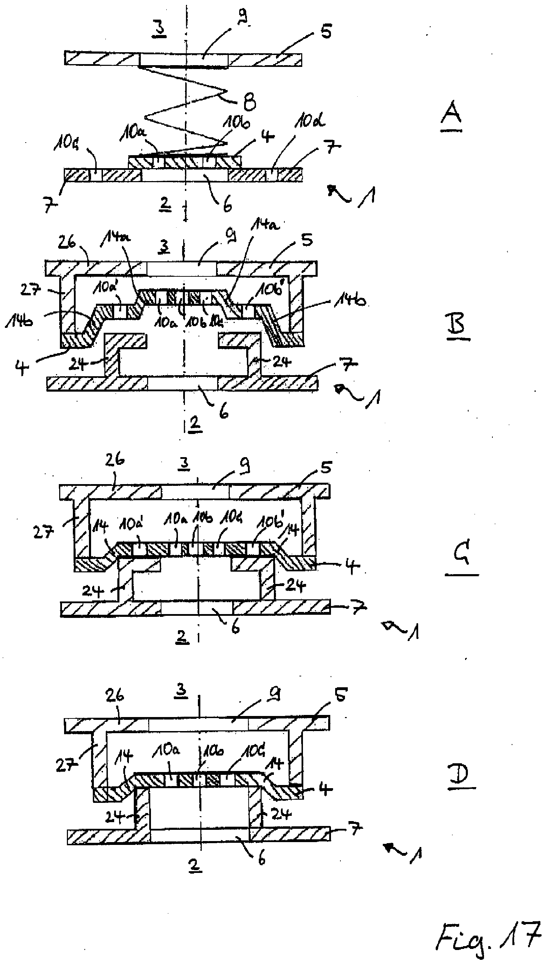

Figur 17 zeigt in den Teilfiguren A, B, C und D vier weitere erfindungsgemäße Ventile 1.

In Figur 17A ist ein Ventil dargestellt, das ähnlich dem Ventil aus Figur la aufgebaut ist. Im Unterschied zum Ventil, das in Figur 1a dargestellt ist, weist nunmehr der Ventilsitz 7 weitere Gasdurchgangsöffnungen 10c, 10d auf, die unabhängig vom Öffnungszustand des Ventils bzw. der Ventilöffnung 6 immer geöffnet sind. Diese Öffnungen 10c und 10d sorgen gemeinsam mit den Öffnungen 10a und 10b dafür, dass auch im Falle eines geschlossenen Ventils 1, d.h. wenn der Ventilverschluss 4 auf dem Ventilsitz 7 aufliegt, immer ein Mindestgasdurchgang durch das Ventil 1 gewährleistet ist.

Figur 17B zeigt ein Ventil 1, das ähnlich dem Ventil in Figur 15 oder in Figur 16 aufgebaut ist. Der Ventilsitz 7 weist wiederum einen Flansch 24 auf, der in Figur 17B jedoch abgewinkelt ist. Die dem Ventilverschluss 4 zugewandte Oberseite des abgewinkelten Bereiches dient im verschlossenen Zustand des Ventils 1 als Auflagefläche für den Ventilverschluss 4. Liegt der Ventilverschluss 4 vollständig auf dieser Auflagefläche des Flansches 24 an, so sind lediglich die Öffnungen 10a, 10b und 10c frei für den Gasdurchgang.

Im Unterschied zu den Figuren 15 und 16, jedoch ähnlich zu Figur 17A, ist der Ventilverschluss 4 nunmehr nicht auf dem Ventilsitz 7 gelagert, sondern auf einem getrennt hiervon angeordneten Ventillager 5. Dieses Ventillager 5 weist eine Durchgangsöffnung 9 auf, durch das die Gase saugseitig durchströmen können.

Das Ventillager 5 weist seinerseits einen senkrecht abstehenden Flansch 27 auf, auf dem der Ventilverschluss 4 an seinem Außenrand gelagert ist. Die weitere Ausgestaltung des Ventilverschlusses 4 entspricht insbesondere bezüglich der geschlitzten Bereiche 14a und 14b demjenigen in den Figuren 15 und 16.

Hebt nun der Ventilverschluss 4 von der Oberfläche des Flansches 24 ab, so werden die weiteren Gasdurchgangsöffnungen 10a' und 10b' für den Gasdurchgang freigegeben. Weiterhin kann sich eine Gasströmung zwischen dem Flansch 24 und dem Ventilverschluss 4 ausbilden, die das Ventillager 5 in Richtung der Saugseite 3 umgeht. In beiden Fällen öffnen sich damit Bypasswege für die Gasströmung.

In Figur 17C ist ein ähnliches Ventil 1 dargestellt wie in Figur 17B. Dieses Ventil 1 ist in Figur 17C im Unterschied zu Figur 17B jedoch nicht im geöffneten, sondern im geschlossenen Zustand dargestellt, bei dem der Ventilverschluss 4 auf der Oberfläche des abgewinkelten Bereiches des Flansches 24 aufliegt und dadurch sowohl die Öffnungen 10a' und 10b' verschlossen sind als auch der Gasweg zur Umgehung des Ventillagers 5 nicht mehr zur Verfügung steht.

Figur 17D zeigt ein weiteres Ventil 1, das weitestgehend demjenigen in den Figuren 17B und 17C entspricht. Im Unterschied zu dem Ventil in den Figuren 17B und 17C weist der Flansch 24 keinen abgewinkelten Bereich auf. Der Ventilverschluss liegt vielmehr auf dem Ende des Flansches 24 auf. Weiterhin besitzt der Ventilverschluss keine Durchgangsöffnungen außerhalb des Bereiches der Ventilöffnung 6, die in Abhängigkeit vom Öffnungszustand des Ventils 1 geöffnet oder geschlossen sind. Die in dem Ventilverschluss 4 vorgesehenen Öffnungen 10a, 10b und 10c sind permanent geöffnet und gewährleisten einen Mindestgasdurchgang durch die Ventilöffnung 6, die Durchlassöffnungen 10a, 10b und 10c und die Öffnung 9 von der Druckseite 2 zur Saugseite 3 des Ventils 1.

## Patentansprüche

1. Ventil (1) zur Steuerung eines Gasstromes von einer Druckseite (2) zu einer Saugseite (3) des Ventils (1), mit einem Ventilsitz (7), mit mindestens einer Öffnung von der Druckseite (2) zur Saugseite (3) als Ventilöffnung (6) einem Ventilverschluss (4), insbesondere einem Ventilteller (4), wobei die Ventilöffnung mittels des Ventilverschlusses (4) verschließbar ist, und
einem Ventillager (5), auf dem der Ventilverschluss (4) federnd gelagert ist,
wobei der Ventilverschluss beim Überschreiten einer vorbestimmten Druckdifferenz zwischen der Druckseite und der Saugseite von dem Ventilsitz abhebt, und
der Ventilverschluss (4) ein oder mehrere Gasdurchtrittsöffnungen (10a,b,c) von der Druckseite (2) zur Saugseite (3) des Ventils (1) aufweist,
**dadurch gekennzeichnet,**
**dass** auf der Saugseite des Ventils (1) in Gasströmungsrichtung hinter mindestens einer, mehreren oder allen der Gasdurchtrittsöffnungen ein oder mehrere Vliese als ein oder mehrere zweite Flüssigkeitsabscheideelemente (15) angeordnet sind.

2. Ventil (1) nach dem vorhergehenden Anspruch, **dadurch gekennzeichnet, dass** mindestens eines der zweiten Flüssigkeitsabscheideelemente (15) Prallabscheideelemente, insbesondere Prallplatten, oder dergleichen, sind.

3. Ventil (1) nach einem der vorhergehenden Ansprüche, **dadurch gekennzeichnet, dass** eines, mehrere oder alle der zweiten Abscheideelemente (15) mit veränderlichem Abstand zu der jeweiligen vorgelagerten Gasdurchtrittsöffnung (10a,b,c) beweglich sind.

4. Ventil (1) nach einem der beiden vorhergehenden Ansprüche, **dadurch gekennzeichnet, dass** eines, mehrere oder alle der beweglichen zweiten Abscheideelemente (15) derart vorgespannt gelagert sind, dass sie bei Überschreiten einer vorbestimmten Druckdifferenz zwischen der Druckseite und der Saugseite des Ventils von der vorgelagerten Durchlassöffnung (10a,b,c) wegbewegt werden.

5. Ventil (1) nach einem der vorhergehenden Ansprüche, **dadurch gekennzeichnet, dass** ein, mehrere oder alle der Gasdurchtrittsöffnungen (10a,b,c) bei geschlossenem Ventil (1) für den Gasdurchtritt von der Druckseite (2) zur Saugseite (3) geöffnet sind, und insbesondere in Gasdurchtrittsrichtung benachbart zur Ventilöffnung (6) angeordnet sind.

6. Ventil (1) nach einem der vorhergehenden Ansprüche, **dadurch gekennzeichnet, dass** der Ventilverschluss (4) ein Lager (19) aufweist, mit dem der Ventilverschluss (4) an einem Ventillager (5), beispielsweise an einem Bereich des Ventilsitzes (7) als Ventillager (5), befestigt ist und der Ventilverschluss im Bereich zwischen Ventillager (19) und Ventilöffnung (6) und/oder im Bereich der Ventilöffnung (6) Schlitze (12a, 12b) aufweist.

7. Ventil (1) nach einem der vorhergehenden Ansprüche, **dadurch gekennzeichnet, dass** der Ventilsitz mindestens eine Wandung (18) aufweist, die den Ventilverschluss (4) umschließt und eine Führung für den Ventilverschluss (4) zumindest abschnittsweise längs der Öffnungs- und/oder Schließrichtung bildet.

8. Ventil (1) nach einem der vorhergehenden Ansprüche, **dadurch gekennzeichnet, dass** eine, mehrere oder alle Gasdurchtrittsöffnungen erste Flüssigkeitsabscheideelemente (11a, b, c) aufweisen und/oder als erste Flüssigkeitsabscheideelemente (11a, b, c) ausgebildet sind.

9. Ventil (1) nach dem vorhergehenden Anspruch, **dadurch gekennzeichnet, dass** ein, mehrere oder alle erste Flüssigkeitsabscheideelemente (11a, b, c) jeweils einen gemeinsamen Auslass für das Gas und die abgeschiedene Flüssigkeit aufweisen.

10. Ventil (1) nach einem der vorhergehenden Ansprüche, **dadurch gekennzeichnet, dass** eine, mehrere oder alle Gasdurchtrittsöffnungen als Düsen ausgebildet sind.

11. Ventil (1) nach einem der vorhergehenden Ansprüche, **dadurch gekennzeichnet, dass** der Ventilverschluss (4) derart vorgespannt ist, dass das Ventil (1) bei Überschreiten einer vorbestimmten Druckdifferenz zwischen der Druckseite (2) und der Saugseite (3) des Ventils (1) öffnet.

12. Ventil (1) nach dem vorhergehenden Anspruch, **dadurch gekennzeichnet, dass** bei Überschreiten einer ersten vorbestimmten Druckdifferenz mindestens eine weitere Gasdurchtrittsöffnung in dem Ventilsitz (7) und/oder in dem Ventilverschluss (4), insbesondere ein Spalt (12), insbesondere ein Ringspalt (12) in dem Ventilverschluss (4) oder zwischen Ventilsitz (7) bzw. Wandung (18) und Ventilverschluss (4) geöffnet wird.

13. Ventil (1) nach einem der vorhergehenden Ansprüche, **dadurch gekennzeichnet, dass** in Strömungsrichtung des Gases hinter dem Spalt zwischen der Ventilöffnung und dem Ventilauslass längs des Spaltes zwischen der Ventilöffnung (6) und dem Ventilverschluss (4) oder längs des Randes der Ventilöffnung (6) und/oder des Venzilverschlusses (4) weitere Abscheideelemente, insbesondere Prallabscheideelemente wie Prallplatten, Vliese oder dergleichen, angeordnet sind.

14. Flüssigkeitsabscheider zur Abscheidung von Flüssigkeiten aus Gasen, insbesondere von Öl aus Blow-By-Gasen eines Verbrennungsmotors,
**gekennzeichnet durch**
ein Ventil (1) nach einem der vorhergehenden Ansprüche.

15. Entlüftungssystem für ein Kurbelgehäuse eines Verbrennungsmotors mit einer Entlüftungsleitung für Blowbygase, die vom Kurbelgehäuse zum Ansaugtrakt des Verbrennungsmotors führt,
**dadurch gekennzeichnet,**
**dass** zur Steuerung des Gasstromes in der Entlüftungsleitung in der Entlüftungsleitung ein Ventil (1) nach einem der Ansprüche 1 bis 13 und/oder ein Flüssigkeitsabscheider nach Anspruch 14 angeordnet ist.

## Claims

1. A valve (1) for controlling a gas stream from a pressure side (2) to a suction side (3) of the valve (1), with a valve seat (7), with at least one opening from the pressure side (2) to the suction side (3) as a valve opening (6),
a valve closure (4), in particular a valve disc (4), wherein the valve opening can be closed by means of the valve closure (4), and
a valve bearing (5), on which the valve closure (4) is resiliently mounted,
wherein the valve closure on exceeding a predetermined pressure difference between the pressure side and the suction side lifts off from the valve seat, and
the valve closure (4) has one or several gas passage openings (10a, b, c) from the pressure side (2) to the suction side (3) of the valve (1),
**characterised in that**
one or several non-woven materials are arranged as one or several second liquid separation elements (15) on the suction side of the valve (1) in the direction of gas flow after at least one, several or all of the gas passage openings.

2. A valve (1) according to the preceding claim, **characterised in that** at least one of the second liquid separation elements (15) is/are impact separation elements, in particular baffle plates, or the like.

3. A valve (1) according to one of the preceding claims, **characterised in that** one, several or all of the second separation elements (15) is/are movable at a variable distance relative to the respective preceding gas passage opening (10a, b, c).

4. A valve (1) according to one of the preceding two claims, **characterised in that** one, several or all of the movable second separation elements (15) are mounted in pre-stressed manner such that they are moved away from the preceding passage opening (10a, b, c) upon exceeding a predetermined pressure difference between the pressure side and the suction side of the valve.

5. A valve (1) according to one of the preceding claims, **characterised in that** one, several or all of the gas passage openings (10a, b, c) when the valve (1) is closed are opened for gas to pass through from the pressure side (2) to the suction side (3), and in particular are arranged in the direction of gas passage adjacent to the valve opening (6).

6. A valve (1) according to one of the preceding claims, **characterised in that** the valve closure (4) has a bearing (19) with which the valve closure (4) is fastened to a valve bearing (5), for example to a region of the valve seat (7) as valve bearing (5), and the valve closure has slots (12a, 12b) in the region between the valve bearing (19) and valve opening (6) and/or in the region of the valve opening (6).

7. A valve (1) according to one of the preceding claims, **characterised in that** the valve seat has at least one wall (18) which encloses the valve closure (4) and forms a guide for the valve closure (4) at least in portions along the opening and/or closing direction.

8. A valve (1) according to one of the preceding claims, **characterised in that** one, several or all of the gas passage openings has/have first liquid separation elements (11a, b, c) and/or are formed as first liquid separation elements (11a, b, c).

9. A valve (1) according to the preceding claim, **characterised in that** one, several or all of the first liquid separation elements (11a, b, c) in each case has/have a common outlet for the gas and for the liquid which is separated off.

10. A valve (1) according to one of the preceding claims, **characterised in that** one, several or all of the gas passage openings are formed as nozzles.

11. A valve (1) according to one of the preceding claims, **characterised in that** the valve closure (4) is pre-stressed such that the valve (1) opens upon exceeding a predetermined pressure difference between the pressure side (2) and the suction side (3) of the valve (1).

12. A valve (1) according to the preceding claim, **characterised in that** upon exceeding a first predetermined pressure difference at least one further gas passage opening in the valve seat (7) and/or in the valve closure (4), in particular a gap (12), in particular an annular gap (12), in the valve closure (4) or between the valve seat (7) or wall (18) and valve closure (4) is opened.

13. A valve (1) according to one of the preceding claims, **characterised in that** further separation elements, in particular impact separation elements such as baffle plates, non-woven fabrics or the like, are arranged in the direction of flow of the gas after the gap between the valve opening and the valve outlet along the gap between the valve opening (6) and the valve closure (4) or along the edge of the valve opening (6) and/or of the valve closure (4)

14. A liquid separator for separating off liquids from gases, in particular oil from blow-by gases of an internal combustion engine, **characterised by** a valve (1) according to one of the preceding claims.

15. A ventilation system for a crankcase of an internal combustion engine with a ventilation line for blow-by gases which leads from the crankcase to the intake tract of the internal combustion engine, **characterised in that** for controlling the gas stream in the ventilation line a valve (1) according to one of Claims 1 to 13 and/or a liquid separator according to Claim 14 is arranged in the ventilation line.

## Revendications

1. Soupape (1) pour le contrôle d'un flux de gaz d'un côté de pression (2) vers un côté d'aspiration (3) de la soupape (1), avec un siège de soupape (7), avec au moins une ouverture du côté de pression (2) vers le côté d'aspiration (3) en tant qu'ouverture de soupape (6),
un obturateur de soupape (4), plus particulièrement une tête de soupape (4), l'ouverture de soupape pouvant être obturée au moyen de l'obturateur de soupape (4) et
un palier de soupape (5) sur lequel l'obturateur de soupape (4) est logé de manière élastique,
l'obturateur de soupape se soulevant du siège de soupape lors du dépassement d'une différence de pression prédéterminée entre le côté de pression et le côté d'aspiration et
l'obturateur de soupape (4) comprenant une ou plusieurs ouvertures de passage de gaz (10a, b, c) du côté de pression (2) vers le côté d'aspiration (3) de la soupape (1),
**caractérisée en ce que**, sur le côté d'aspiration de la soupape (1), dans la direction d'écoulement du gaz derrière au moins une, plusieurs ou toutes les ouvertures de passage de gaz, un ou plusieurs matériaux non tissés sont disposés en tant qu'un ou plusieurs deuxièmes éléments de séparation de liquides (15).

2. Soupape (1) selon la revendication précédente, **caractérisée en ce qu'**au moins un des éléments de séparation de liquides (15) sont des éléments de séparation déflecteurs, plus particulièrement des plaques déflectrices ou autres.

3. Soupape (1) selon l'une des revendications précédentes, **caractérisée en ce qu'**un, plusieurs ou tous les deuxièmes éléments de séparation (15) sont mobiles sur une distance variable par rapport à l'ouverture de passage de gaz (10a, b, c) disposée en amont.

4. Soupape (1) selon l'une des deux revendications précédentes, **caractérisée en ce qu'**un, plusieurs ou tous les deuxièmes éléments de séparation (15) mobiles sont logés de manière précontrainte de façon à ce que, lors d'un dépassement d'une différence de pression prédéterminée entre le côté de pression et le côté d'aspiration de la soupape, ils soient éloignés de l'ouverture de passage (10a, b, c) disposée en amont.

5. Soupape (1) selon l'une des revendications précédentes, **caractérisée en ce qu'**une, plusieurs ou toutes les ouvertures de passage de gaz (10a, b, c) sont ouvertes lorsque la soupape (1) est fermée pour le passage du gaz du côté de pression (2) vers le côté d'aspiration (3) et plus particulièrement, sont disposées, dans la direction de passage du gaz, à proximité de l'ouverture de soupape (6).

6. Soupape (1) selon l'une des revendications précédentes, **caractérisée en ce que** l'obturateur de soupape (4) comprend un palier (19) avec lequel l'obturateur de soupape (4) est fixé à un palier de soupape (5), par exemple à une partie du siège de soupape (7) en tant que palier de soupape (5), et l'obturateur de soupape comprend, dans la zone entre le palier de soupape (19) et l'ouverture de soupape (6) et/ou dans la zone de l'ouverture de soupape (6), des fentes (12a, 12b).

7. Soupape (1) selon l'une des revendications précédentes, **caractérisée en ce que** le siège de soupape comprend au moins une paroi (18), qui entoure l'obturateur de soupape (4) et qui constitue un guidage pour l'obturateur de soupape (4) au moins à certains endroits le long de la direction d'ouverture et/ou de fermeture.

8. Soupape (1) selon l'une des revendications précédentes, **caractérisée en ce qu'**une, plusieurs ou toutes les ouvertures de passage de gaz comprennent des premiers éléments de séparation de liquides (11a, b, c) et/ou sont conçues comme des premiers éléments de séparation de liquides (11a, b, c).

9. Soupape (1) selon la revendication précédente, **caractérisée en ce qu'**un, plusieurs ou tous les premiers éléments de séparation de liquides (11a, b, c) comprennent chacun une sortie commune pour le gaz et les liquides séparés.

10. Soupape (1) selon l'une des revendications précédentes, **caractérisée en ce qu'**une, plusieurs ou toutes les ouvertures de passage de gaz sont conçues comme des buses.

11. Soupape (1) selon l'une des revendications précédentes, **caractérisée en ce que** l'obturateur de soupape (4) est précontraint de façon à ce que la soupape (1) s'ouvre lors d'un dépassement d'une différence de pression prédéterminée entre le côté de pression (2) et le côté d'aspiration (3) de la soupape (1).

12. Soupape (1) selon la revendication précédente, **caractérisée en ce que**, lors d'un dépassement d'une première différence de pression prédéterminée, au moins une autre ouverture de passage de gaz est ouverte dans le siège de soupape (7) et/ou dans l'obturateur de soupape (4), plus particulièrement un interstice (12), plus particulièrement un interstice annulaire (4) est ouvert dans l'obturateur de soupape (4) ou entre le siège de soupape (7) ou la paroi (18) et l'obturateur de soupape (4).

13. Soupape (1) selon l'une des revendications précédentes, **caractérisée en ce que**, dans la direction d'écoulement du gaz derrière l'interstice entre l'ouverture de soupape et la sortie de soupape le long de l'interstice entre l'ouverture de soupape (6) et l'obturateur de soupape (4) ou le long du bord de l'ouverture de soupape (6) et/ou de l'obturateur de soupape (4), sont disposés d'autres éléments de séparation, plus particulièrement des éléments de séparation déflecteurs, comme des plaques déflectrices, des matériaux non tissés ou autres.

14. Séparateur de liquides pour la séparation de liquides dans des gaz, plus particulièrement de l'huile dans des gaz « blow-by » d'un moteur à combustion, **caractérisé par** une soupape (1) selon l'une des revendications précédentes.

15. Système de désaération pour un carter d'un moteur à combustion avec une conduite de désaération pour des gaz blow-by, qui conduit du carter au conduit d'aspiration du moteur à combustion, **caractérisé en ce que**, pour le contrôle du flux de gaz, une soupape (1) selon l'une des revendications 1 à 13 et/ou un séparateur de liquides selon la revendication 14 sont disposés dans la conduite de désaération.
